(19) Europäisches Patentamt
European Patent Office
Office européen des brevets

(11) EP 4 140 738 A1

(12) EUROPEAN PATENT APPLICATION
published in accordance with Art. 153(4) EPC

(43) Date of publication:
**01.03.2023 Bulletin 2023/09**

(21) Application number: **21792869.6**

(22) Date of filing: **20.04.2021**

(51) International Patent Classification (IPC):
***B32B 27/30*** *(2006.01)* ***B32B 27/36*** *(2006.01)*
***C08F 8/32*** *(2006.01)* ***C08F 220/14*** *(2006.01)*

(52) Cooperative Patent Classification (CPC):
**B32B 27/30; B32B 27/36; C08F 8/32; C08F 220/14**

(86) International application number:
**PCT/JP2021/016022**

(87) International publication number:
**WO 2021/215435 (28.10.2021 Gazette 2021/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.04.2020 JP 2020076087**

(71) Applicant: **Kuraray Co., Ltd.**
**Kurashiki-shi, Okayama 710-0801 (JP)**

(72) Inventors:
- **NOMOTO, Yusaku**
  **Tainai-shi, Niigata 959-2691 (JP)**
- **KAINO, Masafumi**
  **Tainai-shi, Niigata 959-2691 (JP)**

(74) Representative: **Müller-Boré & Partner Patentanwälte PartG mbB**
**Friedenheimer Brücke 21**
**80639 München (DE)**

# (54) LAMINATE

(57) The present invention provides a laminate comprising: a layer comprising a resin composition (I) containing 51% by mass or more of an acrylic copolymer (A), the acrylic copolymer (A) containing 40 to 87% by mass of a methyl methacrylate unit, 6 to 30% by mass of a structural unit (R) having at least one ring structure in a main chain, the structural unit (R) being selected from the group consisting of a glutaric anhydride unit and an N-substituted or unsubstituted glutarimide unit, and 7 to 30% by mass of an $\alpha$-methylstyrene unit; and
a layer comprising a resin composition (T) containing polycarbonate.



Processed by Luminess, 75001 PARIS (FR)

## Description

### Technical Field

The present invention relates to a laminate comprising a layer comprising a resin composition containing an acrylic copolymer and a layer comprising a resin composition containing polycarbonate.

### Background Art

Methacrylic resin has excellent transparency, scratch resistance, weather resistance, etc., whereas polycarbonate has excellent impact resistance etc. A laminate comprising a layer comprising a methacrylic resin and a layer comprising polycarbonate has excellent transparency, scratch resistance, weather resistance, impact resistance, and other properties, and is used as a surface member for house walls, furniture, home appliances, electronic devices, display devices, and the like.

The laminate described above is prone to warpage when exposed to high temperature or high humidity over a long period of time, and this may pose a problem in such an application environment. To solve this problem, it is effective to improve the heat resistance and moisture resistance of methacrylic resin. As a specific measure for this, a method of incorporating a structural unit having a cyclic skeleton into a layer comprising a methacrylic resin has been proposed. Patent Literature (PTL) 1 discloses a laminate comprising a layer comprising an acrylic resin containing a methyl methacrylate unit and an unit selected the group consisting of a metacrylic acid unit, an acrylic acid unit, a maleic anhydride unit, an N-substituted or unsubstituted maleimide unit, a glutaric anhydride structural unit, and a glutarimide structural unit and having a glass transition temperature of 110°C or more, and a layer comprising polycarbonate. Patent Literature (PTL) 2 discloses a laminate comprising a layer comprising a methacrylic resin containing a structural unit derived from a methacrylic acid ester having an alicyclic hydrocarbon group and having a glass transition temperature of 120 to 180°C, and a layer comprising polycarbonate. Patent Literature (PTL) 3 discloses a laminate comprising a layer comprising a vinyl copolymer resin containing a (meth)acrylic acid ester structural unit and an aliphatic vinyl structural unit obtained by hydrogenation of 70% or more of aromatic double bonds derived from an aromatic vinyl monomer, and a layer comprising polycarbonate. Patent Literature (PTL) 4 discloses a laminate comprising a layer comprising a resin composition containing a methacrylic resin and an SMA resin (a copolymer resin of styrene and maleic anhydride) and a layer containing polycarbonate.

### Citation List

#### Patent Literature

PTL 1: JP2009-248416A
PTL 2: WO2014/050136
PTL 3: WO2011/145630
PTL 4: WO2015/050051

### Summary of Invention

#### Technical Problem

However, the laminates obtained by these methods contain a structural unit having a cyclic skeleton and therefore have the problems of low surface hardness and reduced weather resistance. Although reduction in surface hardness and weather resistance can be reduced by lowering the content of the structural unit having a cyclic skeleton in terms of the composition ratio, the resulting resin composition has an insufficient glass transition temperature.

The present invention has been made in view of the problems described above. An object of the present invention is to provide a laminate comprising a layer comprising a resin composition containing an acrylic copolymer and a layer comprising a resin composition containing polycarbonate, the laminate having less warpage in high temperature and high humidity and having excellent surface hardness and chemical resistance.

#### Solution to Problem

[1] A laminate comprising:

a layer comprising a resin composition (I) containing 51% by mass or more of an acrylic copolymer (A), the acrylic copolymer (A) containing
30 to 87% by mass of a methyl methacrylate unit,
6 to 40% by mass of a structural unit (R) having at least one ring structure in a main chain, the structural unit (R) being selected from the group consisting of a glutaric anhydride unit and an N-substituted or unsubstituted glutarimide unit, and
7 to 30% by mass of an α-methylstyrene unit; and
a layer comprising a resin composition (T) containing polycarbonate.

[2] The laminate according to [1], wherein the structural unit (R) is an N-substituted or unsubstituted glutarimide unit represented by Formula (QI):

[Chem. 1]

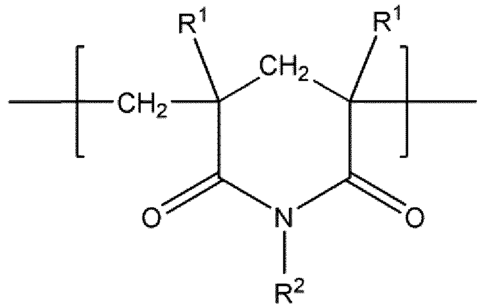

(QI)

wherein $R^1$'s are each independently a hydrogen atom or a methyl group, and $R^2$ is a hydrogen atom, an alkyl group having 1 to 18 carbon atoms, a cycloalkyl group having 3 to 12 carbon atoms, or an organic group having an aromatic ring and 6 to 15 carbon atoms.
[3] The laminate according to [1] or [2], wherein the resin composition (I) contains 1 to 49% by mass of a multilayer copolymer elastomer (B-1) containing a methacrylic acid ester unit and an acrylic acid ester unit.
[4] The laminate according to [1] or [2], wherein the resin composition (I) contains 1 to 49% by mass of a block copolymer elastomer (B-2) comprising a polymer block (b1) containing a methacrylic acid ester unit and a polymer block (b2) containing an acrylic acid ester unit.
[5] The laminate according to [1] or [2], wherein the resin composition (I) contains 1 to 49% by mass of a methacrylic resin (C) .
[6] The laminate according to any one of [1] to [5], wherein the absolute value of the difference in glass transition temperature between the resin composition (I) and the resin composition (T) is 30°C or less and the absolute value of the difference in saturated water absorption rate between the resin composition (I) and the resin composition (T) is 2% or less.
[7] The laminate according to any one of [1] to [6], wherein the thickness of the layer comprising the resin composition (I) is 2 to 15% of the total thickness of the laminate.
[8] The laminate according to any one of [1] to [6], wherein at least one surface of the laminate has the layer comprising the resin composition (I).
[9] The laminate according to any one of [1] to [8], further comprising a scratch-resistant layer on at least one surface of the laminate.

Advantageous Effects of Invention

The laminate of the present invention has less warpage in high temperature and high humidity and has high surface hardness and good weather resistance.

Description of Embodiments

Resin composition (I)

The resin composition (I) contains an acrylic copolymer (A) .

In one preferred embodiment, the resin composition (I) contains an acrylic copolymer (A) and optionally further contains an elastomer (B) and/or a methacrylic resin (C). Examples of the elastomer (B) include a multilayer copolymer elastomer (B-1) and a block copolymer elastomer (B-2).

The content of the acrylic copolymer (A) in the resin composition (I) is 51% by mass or more, preferably 65% by mass or more, more preferably 80% by mass or more, and even more preferably 90% by mass or more. The resin composition may consist only of the acrylic copolymer (A).

Acrylic Copolymer (A)

The acrylic copolymer (A) according to the present invention contains a methyl methacrylate unit, an α-methylstyrene unit, and a structural unit (R).

In the acrylic copolymer (A) according to the present invention, the proportion of the methyl methacrylate unit is 30 to 87% by mass, preferably 40 to 85% by mass, and more preferably 50 to 80% by mass, with respect to all the structural units. When the proportion of the methyl methacrylate unit is less than this range, the total light transmittance of the obtained acrylic copolymer deteriorates, and when the proportion of the methyl methacrylate unit is more than this range, heat resistance of the obtained acrylic copolymer deteriorates.

In the acrylic copolymer (A) according to the present invention, the proportion of the α-methylstyrene unit is 7 to 30% by mass, preferably 8 to 27% by mass, and more preferably 11 to 25% by mass, with respect to all the structural units. When the proportion of the α-methylstyrene unit is less than this range, the saturated water absorption rate of the obtained acrylic copolymer increases. The acrylic copolymer in which the proportion of the α-methylstyrene unit exceeds 30% by mass has low polymerizability and low productivity.

The structural unit (R) is a structural unit having at least one ring structure in a main chain, the structural unit (R) being selected from the group consisting of a glutaric anhydride unit and an N-substituted or unsubstituted glutarimide unit.

The glutaric anhydride unit is a unit having a 2,6-dioxodihydropyrandiyl structure. Examples of the unit having the 2,6-dioxodihydropyrandiyl structure can include a structural unit represented by Formula (QII).

[Chem. 2]

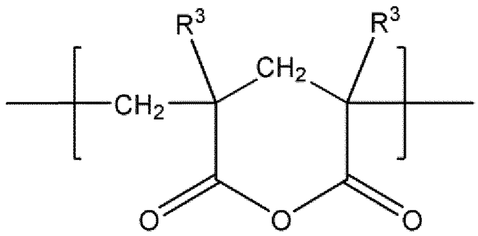

(QII)

In Formula (QII), $R^3$'s are each independently a hydrogen atom or an alkyl group having 1 to 5 carbon atoms, and two $R^3$'s are preferably methyl groups.

The unit having the 2,6-dioxodihydropyrandiyl structure can be contained in the acrylic copolymer by the method described in JP2007-197703A, JP2010-096919A, or the like, for example, by intramolecular cyclization of two adjacent structural units derived from (meth)acrylic acid, intramolecular cyclization of a structural unit derived from (meth)acrylic acid and a structural unit derived from methyl (meth)acrylate, or the like. JP2007-197703A and JP2010-096919A are incorporated herein by reference in their entirety.

The N-substituted or unsubstituted glutarimide unit is a unit having an N-substituted or unsubstituted 2,6-dioxopiperidinediyl structure.

Examples of the unit having the N-substituted or unsubstituted 2,6-dioxopiperidinediyl structure can include a structural unit represented by Formula (QI).

[Chem. 3]

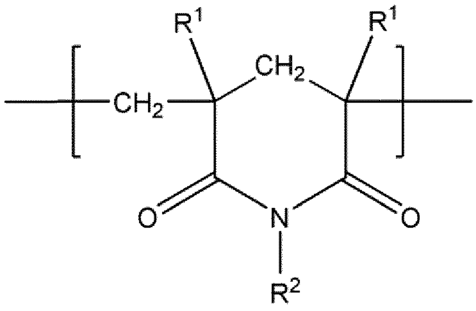

(QI)

In Formula (QI), $R^1$'s are each independently a hydrogen atom or a methyl group, and two $R^1$'s are preferably methyl groups. $R^2$ is a hydrogen atom, an alkyl group having 1 to 18 carbon atoms, a cycloalkyl group having 3 to 12 carbon atoms, or an organic group having an aromatic ring and 6 to 15 carbon atoms, preferably a hydrogen atom, a methyl group, an n-butyl group, a cyclohexyl group, or a benzyl group, and more preferably a methyl group, an n-butyl group, or a cyclohexyl group. The structural unit represented by Formula (QI) may be produced, for example, by a reaction of the corresponding acid anhydride (QIIa) with an imidizing agent represented by $R^2NH_2$ as shown in Scheme (i), or may be produced by an intramolecular cyclization reaction of a copolymer having a partial structure of Formula (QIII). It is preferable to perform heating in order to convert the structural unit represented by Formula (QIII) into the structural unit represented by Formula (QI) by the intramolecular cyclization reaction.

Scheme (i)

[Chem. 4]

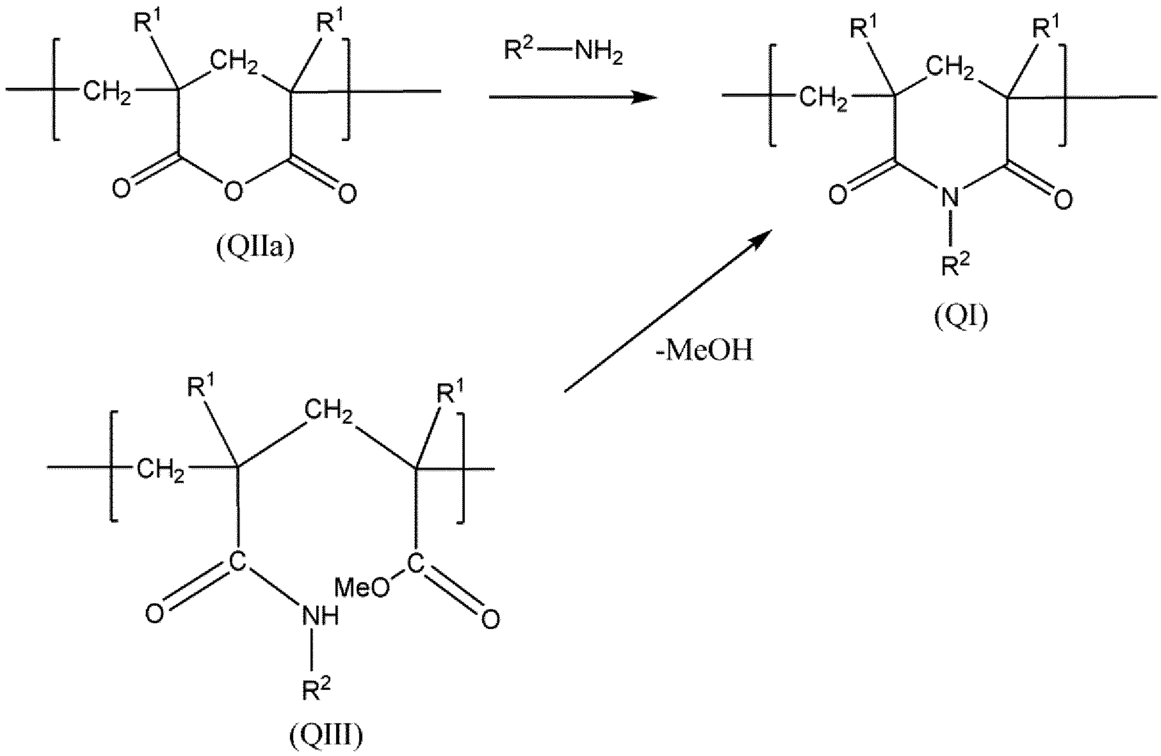


(QIIa) (QI) (QIII)

(In the formula, $R^1$ and $R^2$ are as defined above.)

The N-substituted or unsubstituted glutarimide unit can be obtained by the method described in WO2005/10838A1, JP2010-254742A, JP2008-273140A, JP2008-274187A, or the like, specifically, by reacting two adjacent structural units derived from methyl methacrylate or glutaric anhydride units with an imidizing agent, for example, an aliphatic hydrocarbon group-containing amine such as ammonia, methylamine, ethylamine, n-propylamine, isopropylamine, n-butylamine, isobutylamine, tert-butylamine, or n-hexylamine, an aromatic hydrocarbon group-containing amine such as aniline, toluidine, or trichloroaniline, an alicyclic hydrocarbon group-containing amine such as urea, 1,3-dimethylurea, 1,3-diethylurea, or 1,3-dipropylurea. Among these, ammonia, methylamine, n-butylamine, cyclohexylamine, and benzylamine are preferable; methylamine, n-butylamine, and cyclohexylamine groups are more preferable; and methylamine is still more preferable.

During the imidization reaction, part of the methyl methacrylate unit may be hydrolyzed to a carboxyl group. This carboxyl group is preferably returned to the original methyl methacrylate unit by a reaction with dimethyl carbonate. WO2005/10838A1, JP2010-254742A, JP2008-273140A, and JP2008-274187A are incorporated herein by reference in their entirety.

In the acrylic copolymer (A) according to the present invention, the proportion of the structural unit (R) is 6 to 40% by mass, preferably 7 to 38% by mass, and more preferably 8 to 35% by mass, with respect to all the structural units. The orientation birefringence of the acrylic copolymer can be changed by changing the ratio of the structural unit (R) to methyl methacrylate. As the content of the structural unit (R) increases, the heat resistance of the acrylic copolymer improves, but pliability, compatibility with another copolymer, and molding processability of the acrylic copolymer tend to deteriorate.

The acrylic copolymer (A) of the present invention may contain a structural unit (O) in addition to the methyl methacrylate unit, the $\alpha$-methylstyrene unit, and the structural unit (R). Examples of the structural unit (O) can include a unit derived from a vinyl-based monomer having only one polymerizable carbon-carbon double bond in one molecule, such as (meth)acrylamide, (meth)acrylonitrile, (meth)acrylic acid, or styrene; a structural unit derived from a cyclic acid anhydride, such as maleic anhydride, citraconic anhydride, or dimethyl maleic anhydride; and a structural unit derived from N-substituted maleimide, such as N-methylmaleimide, N-phenylmaleimide, N-benzylmaleimide, and N-cyclohexylmaleimide. Among these, styrene is preferable. When the structural unit (O) is present, the proportion of the structural unit (O) is preferably 2% by mass and more and 20% by mass or less, and more preferably 5% by mass or more and 10% by mass or less, with respect to all the structural units. The proportions of the methyl methacrylate unit, the $\alpha$-methylstyrene unit, the structural unit (R), and the structural unit (O) can be measured by $^1$H-NMR, $^{13}$C-NMR, or the like.

The weight average molecular weight (Mw) of the acrylic copolymer (A) according to the present invention is preferably 40,000 to 200,000, more preferably 50,000 to 180,000, and still more preferably 55,000 to 160,000. When the Mw is 40,000 or more, strength, toughness, and the like of the molded article of the present invention are improved. When the Mw is 200,000 or less, fluidity is improved, and molding processability is improved.

The weight average molecular weight (Mw) is a value calculated by converting a chromatogram measured by gel permeation chromatography into the molecular weight of standard polystyrene.

The acid value of the acrylic copolymer (A) according to the present invention is preferably 0.01 to 0.30 mmol/g and more preferably 0.05 to 0.28 mmol/g. The acid value is a value proportional to the content of the carboxylic acid unit and the carboxylic anhydride unit in the acrylic copolymer. The acid value can be calculated, for example, by the method described in JP2005-23272A. When the acid value is within the above range, the balance between heat resistance, mechanical properties, and molding processability is excellent.

The lower limit of the glass transition temperature of the acrylic copolymer (A) according to the present invention is preferably 130°C, more preferably 131°C, and still more preferably 132°C, and the upper limit of the glass transition temperature of the acrylic copolymer according to the present invention is not particularly limited, and is preferably 160°C.

Herein, the "glass transition temperature (Tg)" is measured in accordance with JIS K7121. Specifically, the temperature is raised to 230°C, cooling is then performed to room temperature, and thereafter, the DSC curve is measured under a condition in which the temperature is raised from room temperature to 230°C at 10°C/min. The midpoint obtained from the DSC curve measured at the time of the second temperature rise is determined to be the "glass transition temperature (Tg)."

The saturated water absorption rate of the acrylic copolymer (A) according to the present invention can be measured under the following conditions. The acrylic copolymer is press-molded to obtain a sheet having a thickness of 1.0 mm. A test piece with a size of 50 mm $\times$ 50 mm is cut out from the central portion of the obtained press-molded sheet, and the test piece is dried with a dryer at 80°C for 16 hours or longer. After the dried test piece is cooled to room temperature in a desiccator, the weight is measured to 0.1 mg, and the weight is defined as an initial weight Wo. The test piece is immersed in distilled water at 23°C, and after immersion for 24 hours, the test piece is taken out from the water, and the moisture on the surface is completely wiped off with a clean dry cloth or filter paper. Within 1 minute of removal from the water, the test piece is again weighed to 0.1 mg. The test piece is immersed again, and after 24 hours, the weight is measured again in the same manner as described above. The weight when the weight change rate of the test piece is within 0.02% of Wo is defined as the saturated weight Ws. The saturated water absorption rate can be calculated from Equation (2).

[Math. 1]

$$\text{Saturated water absorption rate} = ((Ws - Wo)/Wo) \times 100 \quad (2)$$

The saturated water absorption rate is preferably 2.5% or less, more preferably 2.1% or less, and still more preferably 2.0% or less.

The 1% heat weight reduction temperature of the acrylic copolymer (A) according to the present invention in a nitrogen atmosphere is preferably 265°C or higher and more preferably 270°C or higher. The 1% heat weight reduction temperature can be measured by using a thermogravimetric analyzer (TGA) . The 1% heat weight reduction temperature can be determined as the temperature at which a weight reduction of 1% is achieved, based on the weight of the starting materials fed.

The acrylic copolymer (A) according to the present invention can be obtained by a method including subjecting a copolymer of methyl methacrylate and α-methylstyrene (which hereinafter may be referred to as a "precursor polymer") to a ring-forming reaction.

More specifically, the method for producing the acrylic copolymer (A) includes:

a step of continuously supplying, to a tank reactor, a reaction raw material containing a monomer mixture of 70 to 93% by mass of methyl methacrylate, 30 to 7% by mass of α-methylstyrene, and 0 to 10% by mass of a copolymerizable monomer, a radical polymerization initiator, and if necessary, a chain transfer agent;
a step of performing bulk polymerization of the monomer mixture in the tank reactor at a polymerization conversion rate of up to 30 to 60% by mass to obtain a reaction product;
a step of removing the monomer mixture in the reaction product to obtain a precursor polymer; and
a step of subjecting the obtained precursor polymer to a ring-forming reaction,

in which each step can be performed by a known technique.

The copolymerizable monomer can form a structural unit (O).

Multilayer copolymer elastomer (B-1)

The laminate of the present invention preferably contains a multilayer copolymer elastomer (B-1) comprising a methacrylic ester unit and an acrylic ester unit in the layer comprising the resin composition (I). The content of the multilayer copolymer elastomer (B-1) in the resin composition (I) is preferably 1 to 49% by mass, more preferably 5 to 45% by mass, and still more preferably 10 to 40% by mass. When the content of the multilayer copolymer elastomer (B-1) in the laminate of the present invention is in a range of 1 to 49% by mass, brittleness is prevented.

Examples of the multilayer copolymer elastomer include a multilayer copolymer elastomer comprising an outermost layer comprising a thermoplastic polymer (B-1-III) and an inner layer comprising a crosslinked polymer in contact with the outermost layer so as to cover the outermost layer. Examples of the multilayer copolymer elastomer include a two-layer polymer elastomer in which a core (inner layer) is a crosslinked rubber polymer (B-1-II) and an outer shell (outermost layer) is a thermoplastic polymer (B-1-III), a three-layer polymer elastomer in which a core (inner layer) is a crosslinked polymer (B-1-I), an inner shell (inner layer) is a crosslinked rubber polymer (B-1-II), and an outer shell (outermost layer) is a thermoplastic polymer (B-1-III), and a four-layer polymer elastomer in which a core (inner layer) is a crosslinked rubber polymer (B-1-II), a first inner shell (inner layer) is a crosslinked polymer (B-1-I), a second inner shell (inner layer) is a crosslinked rubber polymer (B-1-II), and an outer shell (outermost layer) is a thermoplastic polymer (B-1-III).

From the viewpoint of transparency, it is preferable to select a polymer contained in each layer so that the difference in refractive index between adjacent layers is preferably less than 0.005, more preferably less than 0.004, and still more preferably less than 0.003.

The mass ratio of the inner layer to the outermost layer in the multilayer copolymer elastomer is preferably 60/40 to 95/5 and more preferably 70/30 to 90/10. In the inner layer, a proportion occupied by the layer containing the crosslinked rubber polymer (B-1-II) is preferably 20 to 70% by mass and more preferably 30 to 50% by mass.

The multilayer copolymer elastomer has an average particle diameter of preferably 0.05 to 3 μm, more preferably 0.1 to 2 μm, and still more preferably 0.2 to 1 um. When the multilayer copolymer elastomer has an average particle diameter within the above range, in particular, when a multilayer copolymer elastomer having an average particle diameter of 0.2 to 1 um is used, toughness can be expressed by blending a small amount of the multilayer copolymer elastomer, and thus, rigidity or surface hardness is not impaired. The average particle diameter herein is the average value in the volume-based particle diameter distribution measured by a light scattering method.

The thermoplastic polymer (B-1-III) is a polymer comprising a methacrylic acid alkyl ester unit having an alkyl group having 1 to 8 carbon atoms, and if necessary, further containing a monofunctional monomer unit other than the methacrylic acid alkyl ester. The thermoplastic polymer (B-1-III) preferably contains no polyfunctional monomer unit.

The amount of the methacrylic acid alkyl ester unit having an alkyl group having 1 to 8 carbon atoms constituting the thermoplastic polymer (B-1-III) is preferably 80 to 100% by mass and more preferably 85 to 95% by mass with respect to the mass of the thermoplastic polymer (B-1-III).

As the methacrylic acid alkyl ester having an alkyl group having 1 to 8 carbon atoms (hereinafter referred to as "methacrylic acid $C_{1-8}$ alkyl ester"), for example, methyl methacrylate is preferable.

The amount of the monofunctional monomer unit other than the methacrylic acid $C_{1-8}$ alkyl ester constituting the thermoplastic polymer (B-1-III) is preferably 0 to 20% by mass and more preferably 5 to 15% by mass with respect to the mass of the thermoplastic polymer (B-1-III).

Examples of the monofunctional monomer other than the methacrylic acid $C_{1-8}$ alkyl ester include acrylic acid esters such as methyl acrylate, ethyl acrylate, butyl acrylate, 2-ethylhexyl acrylate, and propyl acrylate; and aromatic vinyl compounds such as styrene.

The outermost layer may be a single layer comprising one thermoplastic polymer (B-1-III) or a multilayer comprising two or more thermoplastic polymers (B-1-III).

The amount of the thermoplastic polymer (B-1-III) is preferably 40 to 75% by mass, more preferably 45 to 68% by mass, and still more preferably 50 to 60% by mass, with respect to the amount of the multilayer copolymer elastomer (B-1).

In one embodiment of the present invention, the layer of the crosslinked elastic body as the inner layer comprises an intermediate layer (inner shell) comprising the crosslinked rubber polymer (B-1-II) and an inner layer (core) comprising the crosslinked polymer (B-1-I) and in contact with the intermediate layer so as to cover the intermediate layer. The inner layer and the intermediate layer of the crosslinked elastic body preferably form a core and a shell.

The crosslinked polymer (B-1-I) contains a methyl methacrylate unit, a monofunctional monomer unit other than methyl methacrylate, and a polyfunctional monomer unit.

The amount of the methyl methacrylate unit constituting the crosslinked polymer (B-1-I) is preferably 40 to 98.5% by mass and more preferably 45 to 95% by mass with respect to the mass of the crosslinked polymer (B-1-I).

The amount of the monofunctional monomer unit other than methyl methacrylate constituting the crosslinked polymer (B-1-I) is preferably 1 to 59.5% by mass and more preferably 4.7 to 54.7% by mass with respect to the mass of the crosslinked polymer (B-1-I).

Examples of the monofunctional monomer other than methyl methacrylate include acrylic acid esters such as methyl acrylate, ethyl acrylate, butyl acrylate, 2-ethylhexyl acrylate, and propyl acrylate; and aromatic vinyl compounds such as styrene.

The amount of the polyfunctional monomer unit constituting the crosslinked polymer (B-1-I) is preferably 0.05 to 0.5% by mass and more preferably 0.1 to 0.3% by mass with respect to the mass of the crosslinked polymer (R). Examples of the polyfunctional monomer include ethylene glycol dimethacrylate, propylene glycol dimethacrylate, triethylene glycol dimethacrylate, hexanediol dimethacrylate, ethylene glycol diacrylate, propylene glycol diacrylate, triethylene glycol diacrylate, allyl methacrylate, and triallyl isocyanurate.

The amount of the crosslinked polymer (B-1-I) is preferably 5 to 40% by mass, more preferably 7 to 35% by mass, and still more preferably 10 to 30% by mass, with respect to the amount of the multilayer copolymer elastomer.

The crosslinked rubber polymer (B-1-II) contains an acrylic acid alkyl ester unit having an alkyl group having 1 to 8 carbon atoms and/or a conjugated diene unit, and a polyfunctional monomer unit.

The amount of the acrylic acid alkyl ester unit having an alkyl group having 1 to 8 carbon atoms and/or the conjugated diene unit constituting the crosslinked rubber polymer (B-1-II) is preferably 98.3 to 99% by mass and more preferably 98.4 to 98.8% by mass with respect to the amount of the crosslinked rubber polymer (B-1-II).

Examples of the acrylic acid alkyl ester having an alkyl group having 1 to 8 carbon atoms include methyl acrylate, ethyl acrylate, butyl acrylate, 2-ethylhexyl acrylate, and propyl acrylate.

Examples of the conjugated diene unit include 1,3-butadiene and isoprene.

Examples of the crosslinked rubber polymer (B-1-II) containing 1,3-butadiene as a monomer include a 1,3-polybutadiene homopolymer or a copolymer containing 50% by weight or more of a 1,3-butadiene unit. Examples of the copolymer include butadiene-aromatic vinyl compound copolymers such as a butadiene-styrene copolymer and a butadiene-vinyltoluene copolymer. Examples further include a terpolymer containing 50% by weight or more of a 1,3-butadiene unit. These copolymers can be usually easily produced by known emulsion polymerization.

The amount of the polyfunctional monomer unit constituting the crosslinked rubber polymer (B-1-II) is preferably 1 to 1.7% by mass, more preferably 1.2 to 1.6% by mass, and still more preferably 1.3 to 1.5% by mass, with respect to the mass of the crosslinked rubber polymer (B-1-II).

Examples of the polyfunctional monomer include those given as examples above.

From the viewpoint of improving bending resistance, the ratio (G/F) of the mass (G) of the polyfunctional monomer unit in the crosslinked polymer (B-1-I) to the mass (F) of the polyfunctional monomer unit in the crosslinked rubber polymer (B-1-II) is preferably 0.01 to 0.25 and more preferably 0.05 to 0.2. The glass transition temperature of the crosslinked rubber polymer (B-1-II) is preferably lower than the glass transition temperature of the crosslinked polymer

(B-1-I).

The amount of the crosslinked rubber polymer (B-1-II) is preferably 20 to 55% by mass, more preferably 25 to 45% by mass, and still more preferably 30 to 40% by mass, with respect to the amount of the multilayer copolymer elastomer (B-1).

In the multilayer copolymer elastomer, the average diameter (d) of the layer of the crosslinked elastic body is preferably 60 to 110 nm, more preferably 65 to 105 nm, and still more preferably 70 to 100 nm. The average diameter d (nm) of the layer of the crosslinked elastic body can be measured as follows. The resin composition (I) containing the multilayer copolymer elastomer is molded into a 3-mm-thick flat plate using a hydraulic press molding machine under conditions of a mold size of 50 mm × 120 mm, a press temperature of 250°C, a preheating time of 3 minutes, a press pressure of 50 kg/cm$^2$, a press time of 30 seconds, a cooling temperature of 20°C, a pressure during cooling of 50 kg/cm$^2$, and a cooling time of 10 minutes. The obtained flat plate is cut in a direction parallel to the long side at -100°C using a microtome to obtain a thin piece having a thickness of 40 nm, and the thin piece is subjected to dye treatment with ruthenium. The thin piece subjected to the dye treatment is observed with a scanning transmission electron microscope (JSM7600F, manufactured by JEOL Ltd.) at an acceleration voltage of 25 kV, and an image is captured. The minor axis and major axis of the portion dyed with ruthenium (exposed portion of the thin piece of the layer of the crosslinked elastic body) are measured, (minor axis + major axis)/2 is defined as the diameter of the layer of the crosslinked elastic body, 20 or more pieces are measured, and then, the number average value (average diameter) is calculated.

The multilayer copolymer elastomer is not particularly limited by its production method. Examples can include emulsion polymerization.

In the case of the emulsion polymerization, for example, a monomer (B-1-i) for constituting the crosslinked polymer (B-1-I) can be subjected to emulsion polymerization to obtain a latex containing the crosslinked polymer (B-1-I), a monomer (B-1-ii) for constituting the crosslinked rubber polymer (B-1-II) can be added to the latex, and the monomer (B-1-ii) can be subjected to seed emulsion polymerization to obtain a latex containing the crosslinked polymer (B-1-II) and the crosslinked rubber polymer (B-1-III), and a monomer (B-1-iii) for constituting the thermoplastic polymer (B-1-iii) can be added to the latex, and the monomer (B-1-III) can be subjected to seed emulsion polymerization to obtain a latex containing multilayer copolymer elastomer. Emulsion polymerization is a known method used for obtaining a latex containing a polymer. Seed emulsion polymerization is a method in which a polymerization reaction of monomers is performed on surfaces of seed particles. The seed emulsion polymerization is preferably used to obtain polymer particles having a core-shell structure.

Block copolymer elastomer (B-2)

The laminate of the present invention preferably contains a block copolymer elastomer (B-2) in a layer comprising the resin composition (I), wherein the block copolymer elastomer (B-2) comprises a polymer block (b1) mainly containing a methacrylic ester unit and a polymer block (b2) containing an acrylic ester unit.

The content of the block copolymer elastomer (B-2) in the resin composition (I) is preferably 1 to 49 mass%, more preferably 5 to 45 mass%, and still more preferably 10 to 40 mass%. When the content of the block copolymer elastomer (B-2) in the laminate of the present invention is in the range of 1 to 49 mass%, brittleness is improved.

The block copolymer elastomer (B-2) is preferably comprising a polymer block (b1) mainly containing a methacrylic acid ester unit and a polymer block (b2) containing an acrylic acid ester unit.

The block copolymer elastomer (B-2) may contain only one polymer block (b1) or a plurality of polymer blocks (b1) in one molecule. The block copolymer elastomer (B-2) may contain only one polymer block (b2) or a plurality of polymer blocks (b2) in one molecule.

The amount of the methacrylic acid ester unit contained in the polymer block (b1) is preferably 80% by mass or more, more preferably 90% by mass or more, still more preferably 95% by mass or more, and still even more preferably 98% by mass or more. The methacrylic acid ester is preferably methyl methacrylate. Such methacrylic acid esters can be used alone or in combination of two or more for the polymer block (b1).

The amount of the polymer block (b1) contained in the block copolymer elastomer (B-2) is preferably 40% by mass or more and 90% by mass or less and more preferably 45% by mass or more and 80% by mass or less, from the viewpoint of transparency, flexibility, bending resistance, impact resistance, pliability, molding processability, surface smoothness, and the like.

The glass transition temperature of the polymer block (b2) is preferably 20°C or lower and more preferably -20°C or lower.

The amount of the acrylic acid ester unit contained in the polymer block (b2) is preferably 90% by mass or more. Examples of the acrylic acid ester include n-butyl acrylate and benzyl acrylate. These acrylic acid esters can be used alone or in combination of two or more for the polymer block (b2).

The polymer block (b2) may contain a monomer unit other than the acrylic acid ester as long as the object and the effect of the present invention are not hindered.

The polymer block (b2) preferably contains an acrylic acid alkyl ester unit and a (meth)acrylic acid aromatic ester unit from the viewpoint of transparency and the like. The mass ratio of the acrylic acid alkyl ester unit to the (meth)acrylic acid aromatic ester unit is preferably 50/50 to 90/10 and more preferably 60/40 to 80/20.

The binding form of the polymer block (b1) and the polymer block (b2) contained in the block copolymer elastomer (B-2) is not particularly limited. For example, a block copolymer in which one end of a polymer block (b2) is connected to one end of a polymer block (b1) (b1-b2 diblock copolymer) or a block copolymer in which one end of a polymer block (b1) is connected to each of both ends of a polymer block (b2) (b1-b2-b1 triblock copolymer) is preferable.

The weight average molecular weight of the block copolymer elastomer (B-2) is preferably 52,000 or more and 400,000 or less and more preferably 60,000 or more and 300,000 or less. The ratio of the weight average molecular weight to the number average molecular weight of the block copolymer elastomer is preferably 1.01 or more and 2.00 or less and more preferably 1.05 or more and 1.60 or less. The weight average molecular weight and the number average molecular weight of the block copolymer elastomer can be appropriately set from the viewpoint of moldability, tensile strength, appearance, and the like. The weight average molecular weight and the number average molecular weight are values in terms of standard polystyrene measured by gel permeation chromatography (GPC).

The block copolymer elastomer (B-2) is not particularly limited by its production method, and can be obtained by a known method. For example, a method including performing living polymerization on monomers constituting each polymer is generally used. As the living polymerization method, a method including performing anionic polymerization in the presence of an organic alkali metal compound and an organoaluminum compound is preferable because a high-purity block copolymer elastomer is obtained, the molecular weight or the composition ratio is easily controlled, and the cost is low.

Methacrylic resin (C)

The laminate of the present invention preferably contains a methacrylic resin (C) in the layer comprising the resin composition (I). The content of the methacrylic resin (C) in the resin composition (I) is preferably 1 to 49% by mass, more preferably 5 to 45% by mass, and still more preferably 10 to 40% by mass. The laminate of the present invention has improved fluidity when the content of the methacrylic resin (C) is in the range of 1 to 49 mass%.

The methacrylic resin (C) preferably contains a structural unit derived from methyl methacrylate (hereinafter referred to as "MMA") in an amount of 70% by mass or more, more preferably 80% by mass or more, and still more preferably 90% by mass, based on all the monomer units. When the methacrylic resin (C) contains a structural unit derived from MMA in an amount of 70% by mass or more, the laminate of the present invention can have enhanced surface hardness. The content of the structural unit derived from MMA in the methacrylic resin (C) can be determined by subjecting the methacrylic resin (C), which is purified by reprecipitation in methanol, to pyrolysis gas chromatography to perform pyrolysis and separation of volatile components, and calculating the content from the ratio of the obtained peak area of MMA to that of the copolymerized components (mainly methyl acrylate).

The methacrylic resin (C) may contain one or more structural units derived from monomers other than MMA in all the monomer units. From the viewpoint of availability, such other monomers are preferably, for example, methyl acrylate (hereinafter referred to as "MA") and ethyl (meth)acrylate. The content of the structural units derived from such other monomers in the methacrylic resin (C) is preferably 30% by mass or less, more preferably 20% by mass or less, and even more preferably 10% by mass or less in total. It is also preferable that the methacrylic resin (C) contains no structural units derived from monomers other than methacrylic acid esters.

The methacrylic resin (C) is obtained by polymerizing MMA alone or with one or more other monomers as optional components. When multiple monomers are used in the polymerization, such multiple monomers are usually mixed to prepare a monomer mixture and the obtained mixture is then subjected to polymerization. The polymerization method is not particularly limited. In terms of productivity, it is preferable to perform radical polymerization, for example, by a bulk polymerization method, a suspension polymerization method, a solution polymerization method, or an emulsion polymerization method.

The lower limit of the triad syndiotacticity (rr) of the metharylic resin (C) is preferably 56% or more, more preferably 57% or more, and still more preferably 58% or more. When the lower limit of the content of such a structure in the resin composition (I) of the present invention is 56% or more, the resin composition (I) according to the present invention has excellent heat resistance.

The triad syndiotacticity (rr) as referred to herein (sometimes simply referred to below as "syndiotacticity (rr)") is a percentage at which two pairs of adjacent structural units (diads) of three successive adjacent structural units (a triad) are both racemic (abbreviated as "rr"). When two adjacent structural units (a diad) in a polymer molecule have the same three-dimensional configuration, the diad is referred to as "meso." When they have the opposite configuration, the diad is referred to as "racemo." Meso and racemo are respectively abbreviated as "m" and "r."

The syndiotacticity (rr) (%) of the methacrylic resin (A) can be calculated by measuring a $^1$H-NMR spectrum in deuterated chloroform at 30°C; measuring, from the spectrum, an area (Y) of the region from 0.6 to 0.95 ppm and an

area (Z) of the region from 0.6 to 1.35 ppm, with the peak of tetramethylsilane (TMS) being taken as 0 ppm; and inputting the obtained values into the formula (Y/Z) × 100.

The methacrylic resin (C) preferably has a weight average molecular weight (hereinafter referred to as "Mw") of 40,000 to 500,000, more preferably 60,000 to 300,000, and even more preferably 80,000 to 200,000. Based on having a Mw of 40,000 or more, the resin composition (I) has excellent mechanical strength. Based on having a Mw of 500,000 or less, the resin composition (I) has excellent fluidity.

The glass transition temperature of the methacrylic resin (C) is preferably 100°C or more, more preferably 105°C or higher, and still more preferably 110°C or higher. Based on having a glass transition temperature of 100°C or higher, the resin composition (I) has excellent heat resistance. The glass transition temperature as referred to herein is a temperature obtained by measuring the temperature at a temperature rise rate of 10°C/min using a differential scanning calorimeter and then calculating the midpoint temperature according to the midpoint method.

The saturated water absorption rate of the methacrylic resin (C) in water at 23°C is preferably 2.5 mass% or less, more preferably 2.3 mass% or less, and still more preferably 2.1 mass% or less. When the saturated water absorption rate is 2.5 mass% or less, the resin composition (I) of the present invention has excellent moisture resistance and can suppress warpage of the obtained laminate due to moisture absorption. The saturated water absorption rate as referred to herein is a mass increase percentage determined by vacuum-drying a molded article for 3 days or more, then immersing the molded article in 23°C distilled water, measuring the molded article in that state over time, comparing the mass of the molded article at the time of reaching the equilibrium to the mass of the molded article after vacuum-drying for 3 days or more.

The methacrylic resin (C) preferably has a melt flow rate (hereinafter referred to as "MFR") in the range of 1 to 10 g/10 min. The lower limit of the MFR is more preferably 1.2 g/10 min or more, and more preferably 1.5 g/10 min or more. The upper limit of the MFR is more preferably 7.0 g/10 min or less, and still more preferably 4.0 g/10 min or less. When the MFR is in the range of 1 to 10 g/10 min, hot melt molding is highly stable. The MFR of the resin composition (I) according to the present invention as referred to herein is a value obtained by measuring the melt flow rate at a temperature of 230°C under a load of 3.8 kg by using a melt indexer.

The resin composition (I) according to the present invention preferably has a melt flow rate of 1 g/10 min or more, more preferably 1.5 to 35 g/10 min, and still more preferably 2 to 20 g/10 min, under conditions of 230°C and a load of 3.8 kg. The melt flow rate is the value of the melt mass flow rate measured in accordance with JIS K7210.

The glass transition temperature of the acrylic resin composition (I) according to the present invention is preferably 100 to 160°C, more preferably 105 to 155°C, and still more preferably 110 to 150°C. When the glass transition temperature is 100°C or lower, heat resistance and the like tend to deteriorate. When the glass transition temperature is 160°C or higher, moldability and the like tend to deteriorate.

The resin composition (I) according to the present invention has a saturated water absorption rate of 2.5% or less, more preferably 2.1% or less, and still more preferably 2.0% or less, when measured under the same conditions as those for measurement of the saturated water absorption rate of the acrylic copolymer (A). When the saturated water absorption rate is 2.5% or less, dimensional stability at a high humidity is excellent.

The resin composition (I) according to the present invention may contain a filler, if necessary, as long as the effect of the present invention is not impaired. Examples of the filler can include calcium carbonate, talc, carbon black, titanium oxide, silica, clay, barium sulfate, and magnesium carbonate. The amount of the filler that can be contained in the resin composition (I) is preferably 3% by mass or less and more preferably 1.5% by mass or less.

The resin composition (I) according to the present invention may contain one or more other polymers as long as the effect of the present invention is not impaired. Examples of such other polymers can include polyolefin resins such as polyethylene, polypropylene, polybutene-1, poly-4-methylpentene-1, polynorbornene; an ethylene-based ionomer; styrene resins such as polystyrene, a styrene-maleic anhydride copolymer, high-impact polystyrene, AS resin, ABS resin, AES resin, AAS resin, ACS resin, and MBS resin; methyl methacrylate-based polymers and methyl methacrylate-styrene copolymers other than the acrylic copolymer (A); polyester resins such as polyethylene terephthalate and polybutylene terephthalate; polyamides such as Nylon 6, Nylon 66, and a polyamide elastomer; polyvinyl chloride, polyvinylidene chloride, polyvinyl alcohol, an ethylene-vinyl alcohol copolymer, polyacetal, polyvinylidene fluoride, polyurethane, a phenoxy resin, modified polyphenylene ether, polyphenylene sulfide, and a silicone modified resin; silicone rubber; styrene-based thermoplastic elastomers such as SEPS, SEBS, and SIS; and olefin rubbers such as IR, EPR, and EPDM. The amount of such other polymers is preferably 10% by mass or less, more preferably 5% by mass or less, and most preferably 0% by mass.

The acrylic resin composition (I) according to the present invention may contain additives such as an antioxidant, a heat deterioration inhibitor, an ultraviolet absorber, a light stabilizer, a lubricant, a release agent, a polymer processing aid, an antistatic agent, a flame retardant, a dye and a pigment, a light diffusing agent, an organic dye, a delustering agent, and a fluorescent substance, in a range in which the effect of the present invention is not impaired.

The antioxidant is effective in preventing oxidative deterioration of the resin by itself in the presence of oxygen. Examples of the antioxidant include a phosphorus-based antioxidant, a hindered phenol-based antioxidant, and a

thioether-based antioxidant. These antioxidants can be used alone or in combination of two or more. Among these, a phosphorus-based antioxidant or a hindered phenol-based antioxidant is preferable, and a combination of a phosphorus-based antioxidant and a hindered phenol-based antioxidant is preferable, from the viewpoint of an effect of preventing deterioration of optical properties due to coloring.

In a case where a combination of a phosphorus-based antioxidant and a hindered phenol-based antioxidant is used, proportions are not particularly limited, and the mass ratio of the phosphorus-based antioxidant to the hindered phenol-based antioxidant is preferably 1/5 to 2/1 and more preferably 1/2 to 1/1.

Examples of the phosphorus-based antioxidant include 2,2-methylenebis(4,6-di-t-butylphenyl)octylphosphite (trade name: ADK STAB HP-10, manufactured by ADEKA Corporation), tris(2,4-dit-butylphenyl)phosphite (trade name: IRUGAFOS168, manufactured by Ciba Specialty Chemicals K.K.), and 3,9-bis(2,6-di-tert-butyl-4-methylphenoxy)-2,4,8,10-tetraoxa-3,9-diphosphaspiro[5.5]undecane (trade name: ADK STAB PEP-36, manufactured by ADEKA Corporation).

Examples of the hindered phenol-based antioxidant include pentaerythrityl-tetrakis[3-(3,5-di-t-butyl-4 hydroxyphenyl)propionate] (trade name: IRGANOX1010, manufactured by Ciba Specialty Chemicals K.K.) and octadecyl-3-(3,5-di-t-butyl-4 hydroxyphenyl)propionate (trade name: IRGANOX1076, manufactured by Ciba Specialty Chemicals K.K.).

Examples of the heat deterioration inhibitor are a compound that can prevent heat deterioration of the resin by scavenging a polymer radical when exposed to high heat in a substantially oxygen-free state, and examples include 2-t-butyl-6-(3'-t-butyl-5'-methyl-hydroxybenzyl)-4-methylphenyl acrylate (trade name: Sumilizer GM, manufactured by Sumitomo Chemical Co., Ltd.), and 2,4-di-t-amyl-6-(3',5'-di-t-amyl-2'-hydroxy-α-methylbenzyl)phenylacrylate (trade name: Sumilizer GS, manufactured by Sumitomo Chemical Co., Ltd.).

The ultraviolet absorber is a compound having an ability to absorb ultraviolet rays. The ultraviolet absorber is a compound having a function of mainly converting light energy into heat energy.

Examples of the ultraviolet absorber can include benzophenones, benzotriazoles, triazines, benzoates, salicylates, cyanoacrylates, oxalic anilides, malonic acid esters, and formamidines. These ultraviolet absorbers may be used alone or in a combination of two or more. Among these, benzotriazoles, triazines, or an ultraviolet absorber having a maximum value εmax of the molar absorption coefficient at a wavelength of 380 to 450 nm of 1,200 $dm^3mol^{-1}cm^{-1}$ or less is preferable.

Preferable examples of the benzotriazoles include 2-(2H-benzotriazol-2-yl)-4-(1,1,3,3-tetramethylbutyl)phenol (trade name: TINUVIN329, manufactured by BASF SE), 2-(2H-benzotriazol-2-yl)-4,6-bis(1-methyl-1-phenylethyl)phenol (trade name: TINUVIN234, manufactured by BASF SE), 2,2'-methylenebis[6-(2H-benzotriazol-2-yl)-4-tert-octylphenol] (trade name: LA-31, manufactured by ADEKA Corporation), 2-(5-octylthio-2H-benzotriazol-2-yl)-6-tert-butyl-4-methylphenol, and the like.

In a case where it is desired to efficiently absorb a short wavelength of 380 nm or less, a triazine ultraviolet absorber is preferably used. Examples of such an ultraviolet absorber can include 2,4,6-tris(2-hydroxy-4-hexyloxy-3-methylphenyl)-1,3,5-triazine (trade name: LA-F70, manufactured by ADEKA Corporation), a hydroxyphenyltriazine-based ultraviolet absorber that is an analog thereof (trade names: TINUVIN477, TINUVIN460, and TINUVIN479; manufactured by BASF SE), and 2,4-diphenyl-6-(2-hydroxy-4-hexyloxyphenyl)-1,3,5-triazine.

The maximum value $\varepsilon_{max}$ of the molar absorption coefficient of the ultraviolet absorber is measured as follows. 10.00 mg of an ultraviolet absorber is added to 1 L of cyclohexane and dissolved so that there is no undissolved matter when visually observed. This solution is injected into a quartz glass cell with a size of 1 cm × 1 cm × 3 cm, and absorbance at a wavelength of 380 to 450 nm is measured using a spectrophotometer (trade name: U-3410, manufactured by Hitachi, Ltd.). The maximum value εmax of the molar absorption coefficient is calculated according to the following equation using a molecular weight ($M_{UV}$) of the ultraviolet absorber and the maximum value ($A_{max}$) of the measured absorbance.

$$\varepsilon_{max} = [A_{max}/(10 \times 10^{-3})] \times M_{UV}$$

The light stabilizer is a compound having a function of scavenging a radical mainly generated by oxidation with light. Examples include hindered amines such as a compound having a 2,2,6,6-tetra-alkyl-piperidine skeleton.

Examples of the lubricant include stearic acid, behenic acid, stearoamide acid, methylenebisstearoamide, triglyceride hydroxystearate, paraffin wax, ketone wax, octyl alcohol, and hardened oil.

The release agent is a compound having a function of facilitating mold release of a molded product from a mold, and examples include higher alcohols such as cetyl alcohol and stearyl alcohol, and glycerin higher fatty acid esters such as stearic acid monoglyceride and stearic acid diglyceride. Since the use of the glycerin higher fatty acid ester may cause gel-like foreign matter, it is preferable to use higher alcohols.

The polymer processing aid is a compound that exhibits effects on thickness accuracy and thinning when the resin composition (I) is molded. The polymer processing aid can be usually produced by an emulsion polymerization

method. The polymer processing aid is preferably polymer particles having a particle diameter of 0.05 to 0.5 um.

The polymer particles may be single-layer particles comprising a polymer having a single composition ratio and a single intrinsic viscosity, or may be multilayer particles comprising two or more polymers that are different in composition ratio or intrinsic viscosity. Among these, particles having a two-layer structure in which a polymer layer having a low intrinsic viscosity is included as an inner layer and a polymer layer having a high intrinsic viscosity of 5 dl/g or more is included as an outer layer are preferable. The polymer processing aid preferably has an intrinsic viscosity of 3 to 6 dl/g. When the intrinsic viscosity is too small, the effect of improving moldability is low. When the intrinsic viscosity is too large, melt fluidity of the acrylic resin composition (I) tends to decrease.

Examples of the antistatic agent include alkylsulfonic acid salts such as sodium heptyl sulfonate, sodium octyl sulfonate, sodium nonyl sulfonate, sodium decyl sulfonate, sodium dodecyl sulfonate, sodium cetyl sulfonate, sodium octadecyl sulfonate, sodium diheptyl sulfonate, potassium heptyl sulfonate, potassium octyl sulfonate, potassium nonyl sulfonate, potassium decyl sulfonate, potassium dodecyl sulfonate, potassium cetyl sulfonate, potassium octadecyl sulfonate, potassium diheptyl sulfonate, lithium heptyl sulfonate, lithium octyl sulfonate, lithium nonyl sulfonate, lithium decyl sulfonate, lithium dodecyl sulfonate, lithium cetyl sulfonate, lithium octadecyl sulfonate, and lithium diheptyl sulfonate.

Examples of the flame retardant include a metal hydrate having a hydroxyl group or crystalline water, such as magnesium hydroxide, aluminum hydroxide, hydrated aluminum silicate, hydrated magnesium silicate, or hydrotalcite, a phosphoric acid compound such as polyphosphoric acid amine or phosphoric acid ester, and a silicon compound. A phosphoric acid-based flame retardant such as trimethyl phosphate, triethyl phosphate, tripropyl phosphate, tributyl phosphate, tripentyl phosphate, trihexyl phosphate, tricyclohexyl phosphate, triphenyl phosphate, tricresyl phosphate, trixylenyl phosphate, dimethylethyl phosphate, methyldibutyl phthalate, ethyldipropyl phosphate, or hydroxyphenyl diphenyl phosphate is preferable.

Examples of the dye and the pigment include a red organic pigment such as para red, fire red, pyrazolone red, thioindigo red, or perylene red, a blue organic pigment such as cyanine blue or indanthrene blue, and a green organic pigment such as cyanine green or naphthol green. These dyes and pigments can be used singly or in a combination of two or more.

As the organic dye, a compound having a function of converting ultraviolet rays into visible rays is preferably used.

Examples of the light diffusing agent or the delustering agent can include glass fine particles, polysiloxane-based crosslinked fine particles, crosslinked polymer fine particles, talc, calcium carbonate, and barium sulfate.

Examples of the fluorescent substance can include a fluorescent pigment, a fluorescent dye, a fluorescent white dye, a fluorescent brightening agent, and a fluorescent bleach.

These additives may be used alone or in combination of two or more. In addition, these additives may be added to a polymerization reaction solution when the acrylic copolymer (A) and the elastomer (B) are produced, may be added to the produced acrylic copolymer (A) or crosslinked rubber (B), or may be added when the acrylic resin composition of the present invention is prepared. The total amount of the additives contained in the resin composition (I) of the present invention is preferably 7% by mass or less, more preferably 5% by mass or less, and still more preferably 4% by mass or less, with respect to the resin composition (I) from the viewpoint of suppressing appearance defects of the molded article.

Resin Composition (T)

The resin composition (T) used to produce the laminate of the present invention is a resin composition containing polycarbonate. The polycarbonate is preferably obtained by copolymerizing a divalent phenol, such as bisphenol A, with a carbonate precursor.

The Mw of the polycarbonate is preferably in the range of 10,000 to 100,000, and more preferably 20,000 to 70,000. Based on having an Mw of 10,000 or more, the laminate of the present invention has excellent impact resistance and heat resistance. Based on having an Mw of 100,000 or less, the polycarbonate has excellent molding processability and the productivity of the laminate of the present invention can be enhanced.

The resin composition (T) may contain other polymers as long as the effect of the present invention is not impaired. Examples of such other polymers include methacrylic resins, the resin composition (I), and the same other polymers as those that the resin composition (I) may optionally contain. Such other polymers can be used singly or in a combination of two or more. The content of such other polymers in the resin composition (T) is preferably 15% by mass or less, more preferably 10% by mass or less, and even more preferably 5% by mass or less.

The above resin composition (T) may contain various additives as needed. Examples of usable additives can be the same as those that the resin composition (I) may optionally contain. The contents of such additives can be appropriately set to any range as long as the effects of the present invention are not impaired. For example, it is preferable that the antioxidant content is 0.01 to 1 part by mass, the ultraviolet absorber content is 0.01 to 3 parts by mass, the light stabilizer content is 0.01 to 3 parts by mass, the lubricant content is 0.01 to 3 parts by mass, and the content of the

dye or pigment is 0.01 to 3 parts by mass, per 100 parts by mass of the polycarbonate.

The resin composition (T) used in the present invention preferably has a glass transition temperature of 120 to 160°C. The resin composition (T) preferably has a glass transition temperature that is comparable to the glass transition temperature of the resin composition (I). Specifically, the absolute value of the difference between the glass transition temperature of the resin composition (T) and the glass transition temperature of the resin composition (I), $|\Delta Tg|$, is preferably 30°C or less, and more preferably 20°C or less. When $|\Delta Tg|$ is 30°C or less, an increased effect of suppressing warpage of the laminate in high temperature and high humidity can be obtained.

The resin composition (T) used in the present invention preferably has a saturated water absorption rate in 23°C water of 0.1 to 1.0 mass%. It is also preferable that the saturated water absorption rate of the resin composition (T) is comparable to that of the resin composition (I). Specifically, the absolute value of the difference between the saturated water absorption rate of the resin composition (T) and the saturated water absorption rate of the resin composition (I), |Δ saturated water absorption rate , is preferably 2.0 mass% or less, and more preferably 1.8 mass% or less. When the difference in the saturated water absorption rate between the two resins is 2.0 mass% or less, an increased effect of suppressing the warpage of the laminate in high temperature and high humidity can be obtained.

The resin composition (T) used in the present invention preferably has an MFR in the range of 1 to 30 g/10 min, more preferably 3 to 20 g/10 min, and still more preferably 5 to 20 g/10 min. When the MFR is in the range of 1 to 30 g/10 min, hot melt molding is highly stable.

The MFR of the resin composition (T) as referred to herein is a value obtained by measurement at a temperature of 300°C under a load of 1.2 kg using a melt indexer.

The polycarbonate may be a commercially available product. Preferable examples of such commercially available products include SD Polycarbonate (registered trademark) manufactured by Sumika Polycarbonate Ltd., Iupilon/Novarex (registered trademark) manufactured by Mitsubishi Engineering-Plastics Corporation, Taflon (registered trademark) manufactured by Idemitsu Kosan Co., Ltd., and Panlite (registered trademark) manufactured by Teijin Chemicals Ltd.

Laminate

The laminate of the present invention may comprise multiple layers comprising the resin composition (I) and/or multiple layers comprising the resin composition (T).

The laminate of the present invention may contain, in addition to the layer comprising the resin composition (I) and the layer comprising the resin composition (T), a layer comprising another resin (another resin layer). Examples of the resin of such another resin layer include various thermoplastic resins other than the resin composition (I) and the resin composition (T), thermosetting resins, energy ray curing resins, and the like.

Examples of such another resin layer include scratch-resistant layers, antistatic layers, antifouling layers, friction-reducing layers, anti-glare layers, anti-reflection layers, adhesive layers, impact stress application layers, and the like.

The resin layers as such another resin layer may be used singly or in a combination of two or more. When the laminate of the present invention comprises a plurality of such other resin layers, the resin of such other resin layers may be the same or different. In the laminate of the present invention, the order of arrangement of such other resin layers is not particularly limited. Each of the other resin layers may be formed on a surface or as an inner layer.

The thickness of the laminate of the present invention is preferably in a range of 0.03 to 6.0 mm, more preferably in a range of 0.05 to 5.0 mm, and more preferably in a range of 0.1 to 4.0 mm, in view of producing the laminate with high productivity while maintaining its excellent appearance.

The thickness of the layer comprising the resin composition (I) in the laminate of the present invention is preferably in a range of 0.01 to 0.6 mm, more preferably in a range of 0.015 to 0.5 mm, and still more preferably in a range of 0.02 to 0.4 mm. When the thickness is less than 0.01 mm, the scratch resistance and weather resistance may be insufficient. When the thickness exceeds 0.6 mm, the impact resistance may be insufficient.

The thickness of the layer comprising the resin composition (T) in the laminate of the present invention is preferably in a range of 0.02 to 5.4 mm, more preferably in a range of 0.035 to 4.5 mm, and still more preferably in a range of 0.08 to 3.6 mm. When the thickness is less than 0.02 mm, the impact resistance may be insufficient. When the thickness exceeds 5.4 mm, the productivity may decrease.

The thickness of the layer comprising the resin composition (I) in the laminate is preferably in a range of 2 to 15%, more preferably 3 to 12%, and still more preferably 4 to 10%, of the thickness of the laminate. When the proportion of the thickness is less than 2%, the scratch resistance and weather resistance may be insufficient. When the proportion of the thickness exceeds 15%, the impact resistance may be insufficient.

The thickness of the layer comprising the resin composition (T) in the laminate is preferably in a range of 85 to 98%, more preferably 88 to 97%, and still more preferably 90 to 96%, of the thickness of the laminate. When the proportion of the thickness is less than 85%, the impact resistance may be insufficient. When the proportion of the thickness is 15% or more, the weather resistance may be insufficient.

When the laminate of the present invention consists only of at least one layer comprising the resin composition (I) and at least one layer comprising the resin composition (T) and when the layer comprising the resin composition (I) is represented by (1) and the layer comprising the resin composition (T) is represented by (2), the layers of the laminate of the present invention may be, for example, in the order of (1)-(2), (1)-(2)-(1), (2)-(1)-(2), or (1)-(2)-(1)-(2)-(1). In view of increasing the scratch resistance, the layers is preferably laminated in the order of, for example, (1) - (2), (1)-(2)-(1), or (1)-(2)-(1)-(2)-(1) so that at least one surface comprises the layer comprising the resin composition (I).

When the laminate of the present invention comprises another resin layer and when said another resin layer is represented by (3), the layers of the laminate of the present invention may be in the order of, for example, (1)-(2)-(3), (3)-(1)-(2), (3)-(1)-(2)-(3), (3)-(1)-(2)-(1)-(3), or (1)-(2)-(3)-(2)-(1) .

For example, when the layer (3) is an scratch-resistant layer and when the scratch-resistant layer is represented by (3'), the layers of the laminate of the present invention are preferably, for example, in the order of (3')-(1)-(2), (3')-(1)-(2)-(3'), or (3')-(1)-(2)-(1)-(3') so that at least one surface comprises the scratch-resistant layer.

When the laminate of the present invention further comprises, in addition to the layer (3), another resin layer that is different from the layer (3) and when the resin layer that is different from the layer (3) is represented by (4), the layers of the laminate of the present invention may be, for example, in the order of (1)-(2)-(3)-(4), (4)-(3)-(1)-(2), (4)-(3)-(1)-(2)-(3), (4)-(1)-(2)-(3), (4)-(3)-(1)-(2)-(3)-(4), or (4)-(3)-(1)-(2)-(1)-(3)-(4) .

For example, when the layer (3) is an scratch-resistant layer and the layer (4) is an anti-reflection layer and when the anti-reflection layer is represented by (4'), the layers of the laminate are preferably, for example, in the order of (4')-(3')-(1)-(2), (4')-(3')-(1)-(2)-(3'), (4')-(3')-(1)-(2) -(3')-(4'), or (4') - (3') - (1) - (2) - (1) - (3') - (4') .

In view of suppressing the occurrence of warpage of the laminate in high temperature and high humidity, the layers of the laminate of the present invention are preferably, for example, in the order in which the layers are symmetrical in the thickness direction, and are more preferably laminated in such a manner that the thickness of each layer is also symmetrical.

The total light transmittance of the laminate of the present invention is preferably 80% or more, more preferably 85% or more, and still more preferably 90% or more. Based on having a total light transmittance of 80% or higher, the laminate obtained by the present invention has an excellent appearance quality. The total light transmittance can be measured in accordance with JIS K7105.

The method for producing the laminate of the present invention is not particularly limited. It is usually preferable that the layer comprising the resin composition (I) and the layer comprising the resin composition (T) be laminated by multilayer molding. Examples of multilayer molding include lamination molding methods such as multilayer extrusion molding, multilayer blow molding, multilayer press molding, multi-color injection molding, and insert injection molding. In view of productivity, multilayer extrusion molding is preferable.

Examples of the method for further laminating another resin layer include a method comprising performing multilayer molding of anther resin layer together with the layer comprising the resin composition (I) and the layer comprising polycarbonate in the same manner as described above, a method comprising coating the surface of either the layer comprising the resin composition (I) or the layer comprising the resin composition (T), which are prepared beforehand, with another fluid resin, and drying or curing the resin; and a method comprising laminating another resin layer on the surface of either the layer comprising the resin composition (I) or the layer comprising the resin composition (T), which are prepared beforehand, via an adhesive layer.

The multilayer extrusion molding method is not particularly limited. Known multilayer extrusion molding methods that are used in producing a multilayer laminate of thermoplastic resin can be preferably used. More preferably, molding is performed by using a device including a flat T-die and a polishing roll with a mirror-finished surface.

Examples of T-die systems for ues in this case can be used include a feed block system comprising laminating the resin composition (I) and the resin composition (T) in a heated molten state before feeding the compositions into a T-die, and a multi-manifold system comprising laminating the resin composition (I) and the resin composition (T) within a T-die, and the like. In view of enhancing the smoothness of an interface between layers constituting the laminate, the multi-manifold system is preferable.

Examples of the polishing roll for use in this case include a metal roll and an elastic roll that has a metallic thin film formed on the outer periphery (which may be referred to as a "metal elastic roll"). The metal roll is not particularly limited as long as it has high rigidity. Examples include a drilled roll and a spiral roll. The surface state of the metal roll is not particularly limited, and can be, for example, a mirror surface, or may have a pattern or a concave-convex shape. The metal elastic roll comprises, for example, a substantially columnar shaft roll rotatably provided, a metallic thin film disposed so as to cover the outer peripheral surface of the shaft roll and having a cylindrical shape in contact with a film-like object, and a fluid encapsulated between the shaft roll and the metallic thin film. Since the metal elastic roll includes fluid, the metal elastic roll shows elasticity. The shaft roll is not particularly limited and is formed of, for example, stainless steel. The thin metallic film is formed of, for example, stainless steel, and preferably has a thickness of about 2 to 5 mm. The thin metallic film preferably has bendability, flexibility, and the like, and preferably has a seamless structure with no welded seam. The metal elastic roll comprising such a thin metallic film is excellent in durability and

can be treated like a general mirror-finished roll if the metallic thin film is mirror-finished. Further, if a pattern or concave-convex shape is imparted to the thin metallic film, the metal elastic roll can transfer the shape; therefore, the metal elastic roll is convenient.

The resin composition (I) and the resin composition (T) are preferably melt-filtered through a filter before multilayer molding and/or during multilayer molding. Multilayer molding using the melt-filtered resin compositions makes it possible to obtain a laminate with fewer defects due to foreign matter or gel. The filter material of the filter to be used is not particularly limited, and is appropriately selected depending on the use temperature, viscosity, and filtration accuracy. For example, a non-woven fabric, such as polypropylene, cotton, polyester, rayon, or glass fiber; a phenolic resin-impregnated cellulose film; a metal fiber non-woven fabric sintered film; a metal powder sintered film; a woven metal wire; or a combination thereof can be used. In particular, in terms of heat resistance and durability, it is preferable to use a stack of metal fiber non-woven fabric sintered films.

The filtration accuracy of the filter is not particularly limited, but is preferably 30 um or less, more preferably 10 um or less, and still more preferably 5 μm or less.

As an example of the layer comprising another resin composition, a scratch-resistant layer is described in detail below. The scratch-resistant layer as referred to herein is a layer for increasing the hardness as measured according to a pencil scratch test. It is preferable that the scratch-resistant layer be a layer showing a hardness of 4H or more in the pencil scratch test specified in JIS-K5600-5-4. The scratch-resistant layer is preferably formed on the surface of the layer comprising the resin composition (I).

The thickness of the scratch-resistant layer is preferably in a range of 2 to 10 μm, more preferably 3 to 8 μm, and still more preferably 4 to 7 um. When the thickness is 2 μm or more, the scratch resistance tends to be maintained. When the thickness is 10 μm or less, the laminate tends to have excellent impact resistance.

The scratch-resistant layer is generally formed by applying a curable fluid composition comprising a monomer, an oligomer, a resin, etc. to the surface of another layer (for example, the layer comprising the resin composition (I) or the layer comprising the resin composition (T)) and curing the composition. Examples of such curable compositions include thermosetting compositions that are curable by heat, and energy-ray-curable compositions that are curable by energy rays, such as an electron beam, radiation, or ultraviolet light.

Examples of curable compounds contained in such thermosetting compositions include compositions comprising phenolic resin, urea resin, diallyl phthalate resin, melamine resin, guanamine resin, unsaturated polyester resin, polyurethane resin, epoxy resin, amino alkyd resin, melamine-urea co-condensation resin, silicon resin, and polysiloxane resin.

Such thermosetting compositions may contain, for example, a crosslinking agent, a curing agent such as a polymerization initiator, a polymerization accelerator, and the like, as needed. As curing agents, isocyanate, organic sulfonic acid, and the like are usually used for a polyester resin and a polyurethane resin; amine is usually used for an epoxy resin; peroxides such as methyl ethyl ketone peroxide and radical initiators such as azobisisobutyl ester, are usually used for unsaturated polyester resin.

Examples of curable compounds contained in energy-ray-curable compositions include oligomers and/or monomers having a polymerization-unsaturated bond, such as an acryloyl group or a methacryloyl group, a thiol group, or an epoxy group in a molecule. In view of increasing the scratch resistance, oligomers and/or monomers having a plurality of acryloyl groups or methacryloyl groups are preferable.

The energy-ray-curable composition may contain a photopolymerization initiator and/or a photosensitizer in addition to the curable compound. Examples of the photopolymerization initiator include carbonyl compounds such as benzoin methyl ether, acetophenone, 3-methylacetophenone, benzophenon, and 4-chlorobenzophenon; sulfur compounds such as tetramethylthiuram monosulfide and tetramethylthiuram disulfide; 2,4,6-trimethylbenzoyldiphenylphosphine oxide, and benzoyldiethoxyphosphine oxide. Examples of the photosensitizer include n-butylamine, triethylamine, and tri-n-butylphosphine.

In the curable composition, the content of such curable compounds is preferably in a range of 30 to 100% by mass, more preferably in a range of 40 to 95% by mass, and still more preferably in a range from 50 to 95% by mass. These curable compounds may be used singly or in a combination of two or more.

The curable composition may contain, as needed, a monofunctional monomer; an organic solvent; and additives such as a leveling agent, an antiblocking agent, a dispersion stabilizer, an ultraviolet absorbing agent, a light stabilizer, an antioxidant, an anti-foam agent, a thickener, a lubricant, an antistatic agent, a stain-proofing agent, an anti-fog agent, a filler, or a catalyst. The content of these additives can be appropriately set as long as the advantageous effects of the present invention are not impaired.

Examples of the method for applying the curable composition include a spin coating method, a dip method, a spray method, a slide coating method, a bar coating method, a roll coating method, a gravure coating method, a meniscus coating method, a flexographic printing method, and a screen printing method.

The laminate of the present invention can be used for the following applications. Examples of applications include a sign part or a marking film such as an advertising tower, a stand sign, a side sign, a transom sign, or a rooftop

sign; a display part such as a showcase, a divider, or a store display; a lighting part such as a fluorescent lamp cover, a mood lighting cover, a lamp shade, a light ceiling, a light wall, or a chandelier; an interior part such as furniture, a pendant, or a mirror; a building part such as a door, dome, a safety windowpane, a partition, a stair wainscot, a balcony wainscot, or a roof of a leisure building; a transport equipment part such as an aircraft windshield, a pilot visor, a motorcycle, a motor boat windshield, a bus shading plate, an automobile side visor, a rear visor, a head wing, a headlight cover, an interior automobile part, or an exterior automobile part such as a bumper; an electronic equipment part such as a nameplate for audio and video, a stereo cover, a television protection mask, a vending machine, a cellular phone, or a personal computer; a medical equipment part such as an incubator or an X-ray part; an instrument part such as a machine cover, an instrument cover, an experimental device, a ruler, a dial, or an observation window; an optical part such as a liquid crystal protection plate, a light guide plate, a light guide film, a Fresnel lens, a lenticular lens, front panels of various displays, or a diffuser plate; a transportation part such as a road sign, a direction board, a curved mirror, or a soundproof wall; in addition, a greenhouse, a large water tank, a box water tank, a bathroom member, a clock panel, a bathtub, sanitary, a desk mat, a game part, a toy, a musical instrument, a mask for face protection during welding, a back sheet for a solar cell, a flexible solar cell front sheet, and a decorative film; and a surface material used for a personal computer, a cellular phone, furniture, a vending machine, or a bathroom member.

## Examples

Next, the present invention will be more specifically described with reference to Examples. Note that the present invention is not limited by the Examples.
Physical properties and the like were measured by the following methods.

### Weight Average Molecular Weight

The weight average molecular weight (Mw) of the resin obtained in each of the Production Examples was determined by a gel permeation chromatography method (GPC method). A sample solution was prepared by dissolving 4 mg of a resin to be measured in 5 ml of tetrahydrofuran. The temperature of a column oven was set to 40°C, 20 pl of the sample solution was injected into an apparatus at an eluent flow rate of 0.35 ml/min, and a chromatogram was measured. 10 standard polystyrenes having a molecular weight within a range of 400 to 5,000,000 were subjected to GPC measurement, and a calibration curve showing a relationship between the holding time and the molecular weight was created. Based on the calibration curve, Mw of the resin to be measured was determined. A value corresponding to the molecular weight of the standard polystyrene obtained from the chromatogram measured by GPC was defined as the molecular weight of the copolymer.

Apparatus: HLC-8320 GPC apparatus manufactured by Tosoh Corporation
Separation column: serially connected TSK guard column Super HZ-H, TSKgel HZM-M, and TSKgel Super HZ4000 manufactured by Tosoh Corporation
Eluent: tetrahydrofuran
Eluent flow rate: 0.35 ml/min
Column temperature: 40°C
Detection method: differential refractive index (RI)

### Each Unit Composition in Copolymer

The proton ratio of a phenyl group of an α-methylstyrene unit to a methoxy group of a methyl methacrylate unit was determined by $^1$H-NMR, and the content of the α-methylstyrene unit was calculated according to the proton ratio.

### Glass Transition Temperature Tg

The resin composition obtained in each of the Production Examples was heated to 250°C and then cooled to room temperature, and then, a DSC curve was measured under a condition in which the temperature was raised from room temperature to 200°C at 10°C/min using a differential scanning calorimeter (DSC-50 (product number), manufactured by Shimadzu Corporation) in accordance with JIS K7121. The glass transition temperature at the midpoint obtained from the DSC curve measured at the time of the second temperature rise was defined as the glass transition temperature in the present invention.

Each Unit Composition of Acrylic Copolymer

The α-methylstyrene unit and the styrene unit had the same composition as each unit composition of the precursor polymer. $^1$H-NMR measurement of the acrylic copolymer was performed using $^1$H-NMR (trade name: ULTRA SHIELD 400 PLUS, manufactured by Bruker Corporation), the content (mol%) of each of the monomer units such as the glutarimide unit, the methyl methacrylate unit, and the aromatic vinyl (α-methylstyrene and styrene) unit in the acrylic copolymer was determined, and the content (mol%) was converted into content (% by weight) using the molecular weight of each monomer unit.

1% Heat Weight Reduction Temperature

The resin composition obtained in each of the Production Examples was heated at 10°C/min in a nitrogen atmosphere using a thermogravimetric measurement device (TGA-50, manufactured by Shimadzu Corporation), and the temperature at the time of 1% weight reduction was defined as the 1% heat weight reduction temperature.

Saturated Water Absorption Rate

The resin composition obtained in each of the Production Examples was placed in a rectangular mold frame with short sides measuring 110 mm and long sides measuring 150 mm, and pressed at 230°C and 50 kg/cm$^2$ for 5 minutes, thereby preparing a sheet having a thickness of 2 mm, short sides measuring 110 mm, and long sides measuring 150 mm. A test piece prepared by cutting the obtained sheet into a square piece with sides measuring 50 mm was dried in reduced pressure (1 kPa) at 80°C for 24 hours and then allowed to cool in a desiccator at a temperature of 23°C and a relative humidity of 50%. Thereafter, the mass of the test piece was promptly measured and used as the initial mass. Subsequently, the test piece was immersed in distilled water at 23°C, and the mass was measured over time. The saturated water absorption rate was calculated according to the following equation using the mass (water absorption mass) at the time when no mass change was observed.

$$\text{Saturated water absorption rate (\%)} = [(\text{water absorption mass} - \text{initial mass})/\text{initial mass}] \times 100$$

Pencil Hardness

The resin composition obtained in each of the Production Examples was placed in a rectangular mold frame with short sides measuring 110 mm and long sides measuring 150 mm and pressed at 230°C and 50 kg/cm$^2$ for 5 minutes, thereby preparing a sheet having a thickness of 2 mm, short sides measuring 110 mm, and long sides measuring 150 mm. Using a pencil scratch tester with a movable table (model P) (manufactured by Toyo Seiki Seisaku-sho, Ltd.), the presence of scratches was checked for while pressing a pencil lead against the surface of the prepared sheet at an angle of 45 degrees and a load of 500 g. The pencil lead hardness was gradually increased, and the hardness of the lead that was one level softer than at the time when a scratch occurred was defined as the pencil scratch hardness.

Moldability

The appearance of the laminate of each of the Examples and Comparative Examples was visually observed. The quality of moldability was determined based on the presence or absence of foaming or gel particles.

A: No foaming and no occurrence of gelation
C: Occurrence of foaming or gelation

Dimensional Stability

The laminates of the Examples and Comparative Examples were cut into rectangular pieces having long sides parallel to the direction of the extrusion flow and short sides perpendicular to the direction of the extrusion flow, thereby preparing test pieces having long sides measuring 200 mm and short sides measuring 120 mm. Each test piece was placed on a surface plate so that both ends of the test piece were in contact with the surface plate (i.e., so that the test piece was convex upward), and the maximum value of the gap between the test piece and the surface plate was measured with a feeler gauge and defined as the initial warpage amount.

Subsequently, each test piece was left in a hot-air dryer set at a temperature of 100°C for 1 hour, hung with

the short side clipped in an environmental test chamber set at a temperature of 85°C and a relative humidity of 85%, and then left in that state for 72 hours. Thereafter, each test piece was allowed to cool and subjected to moisture conditioning in an environment of 23°C and a relative humidity of 50% for 120 hours. As a result, all of the test pieces had bow-shaped warpage along the long sides of the test pieces, with the layer of the resin composition (I) being on the outer side and the layer of the resin composition (T) being on the inner side. Each test piece having bow-shaped warpage was placed on a surface plate so that both ends of the test piece were in contact with the surface plate (i.e., so that the test piece was convex upward), and the maximum value of the gap between the test piece and the surface plate was measured with a feeler gauge and defined as the warpage amount in high temperature and high humidity. The amount of change in warpage in high temperature and high humidity was calculated from the following equation, and the quality of dimensional stability was determined based on the amount of change.

$$\text{Amount of change in warpage in high temperature and high humidity} = \text{amount of warpage in high temperature and high humidity} - \text{initial warpage amount}$$

H: The amount of change in warpage in high temperature and high humidity is 2 mm or less.
A: The amount of change in warpage in high temperature and high humidity is greater than 2 mm but less than 3 mm.
C: The amount of change in warpage in high temperature and high humidity is greater than 3 mm.

Surface Hardness

The laminates of the Examples and Comparative Examples were cut into rectangular pieces having long sides parallel to the direction of the extrusion flow and short sides perpendicular to the direction of the extrusion flow, thereby preparing test pieces having long sides measuring 200 mm and short sides measuring 120 mm. Using a pencil scratch hardness tester (model P) (manufactured by Toyo Seiki Seisaku-sho, Ltd.), the presence of scratches was checked for while pressing a pencil lead against the surface on the resin composition (I) side of each test piece at an angle of 45 degrees and a load of 500 g. The pencil lead hardness was gradually increased, and the hardness of the lead that was one level softer than at the time when a scratch occurred was defined as the pencil scratch hardness.

H: The pencil hardness of the surface on the resin composition (I) side of the laminate is 3H or more.
A: The pencil hardness of the surface on the resin composition (I) side of the laminate is 2H.
C: The pencil hardness of the surface on the resin composition (I) side of the laminate is H or less.

Weather Resistance

The laminates of the Examples and Comparative Examples were cut into 50 mm × 50 mm test pieces. The surface on the resin composition (I) side of each test piece was irradiated with ultraviolet rays at a black panel temperature of 83°C, a relative humidity of 50%, and an irradiation energy of 100 mW/cm$^2$ for 100 hours using a super UV tester (SUV-W161, manufactured by Iwasaki Electric Co., Ltd.). Each test piece was then removed from the tester, and the condition of the surface on the resin composition (I) side was visually observed. The quality of weather resistance was determined based on the presence or absence of cracks.

A: No cracking occurs on the surface on the resin composition (I) side of the laminate.
C: Cracking occurs on the surface on the resin composition (I) side of the laminate.

Precursor Polymer

Precursor polymers A-a to A-g according to the present Production Examples were produced by the following method.

Precursor Polymers A-a to A-f

Purified methyl methacrylate (MMA), α-methylstyrene, 2,2'-azobis(2-methylpropionitrile) (AIBN), and n-octyl mercaptan (n-OM) were placed in an autoclave with a stirrer in proportions shown in Table 1, and the mixture was uniformly dissolved, thereby obtaining a polymerization raw material.
The polymerization raw material was continuously supplied from the autoclave to a tank reactor controlled at

a polymerization temperature of 120°C at 1.5 kg/hr and subjected to polymerization by the bulk polymerization method with an average retention time of 3 hours, and a solution containing an acrylic copolymer was continuously discharged from the tank reactor. The polymerization conversion rate was the value as shown in Table 1. Subsequently, the solution discharged from the reactor was heated to 230°C and supplied to a twin-screw extruder controlled to 240°C. In the twin-screw extruder, volatile matter comprising an unreacted monomer as a main component was separated and removed, and the acrylic copolymer was extruded as a strand. The strand was cut with a pelletizer, thereby obtaining precursor polymers A-a to A-f. The weight average molecular weight Mw, ratio of the $\alpha$-methylstyrene structural unit, and glass transition temperature Tg of each of the obtained precursor polymers A-a to A-f were measured. The results are shown in Table 1. In the present Production Examples, the amount (% by mass) of the unit derived from MMA is {100-(% by mass of the units other than $\alpha$-methylstyrene unit)}; thus, the description thereof was omitted in Table 1.

Precursor Polymer A-g

An MS resin (a copolymer of methyl methacrylate (MMA) and styrene (St)) was produced according to the production method of a copolymer (A) described in the section of [Examples] in JP2003-231785A. A precursor polymer A-g having Mw of 95000, Tg of 116°C, and a content of a styrene monomer unit of 10% by mass was obtained by changing the mass ratio of MMA, St, and t-dodecyl mercaptan (t-DM) to be placed in an autoclave. The amount of the MMA unit of the precursor polymer A-g was 90% by mass.

Examples of Materials

The following materials were used for the methacrylic resin (C), styrene-based copolymer (S), and polycarbonate of the present invention.

Methacrylic resin (C): PARAPET manufactured by Kuraray Co., Ltd. (Mw = 90,000, copolymerization ratio of MMA = 99.3%, copolymerization ratio of MA = 0.7%, Tg = 117°C, saturated water absorption rate = 2.0%)
Styrene-based copolymer (S-1): RESISFY manufactured by Denka Company Limited (Mw = 80,000, styrene/maleic anhydride/MMA = 56%/18%/26%, Tg = 137°C, saturated water absorption rate = 0.8%) Styrene-based copolymer (S-2): XIRAN manufactured by Polyscope (Mw = 80,000, styrene/maleic anhydride = 74%/26%, Tg = 160°C, saturated water absorption rate = 0.3%)
Polycarbonate: SD POLYCA manufactured by Sumika Polycarbonate Limited (Mw = 50,000, Tg = 150°C, saturated water absorption rate = 0.3%)

Production Example 1

To the transport part of a twin-screw extruder (trade name: KZW20TW-45MG-NH-600, manufactured by Technovel Corporation) that includes a transport part, a melt-kneading part, a devolatilization part, and a discharge part and in which the screw rotation speed and temperature were set to 120 rpm and 250°C, respectively, the precursor polymer [A-a] was supplied at 2 kg/hr, and monomethylamine was injected at 0.10 kg/hr through the additive supply port of the twin-screw extruder in the melt-kneading part installed in a kneading block to react the precursor polymer [A-a] and the monomethylamine. A reverse flight was installed in the screw at the end of a reaction zone.

In the devolatilization part set to 20 Torr (about 2.7 kPa), by-products and excess monomethylamine were volatilized from the molten resin passed through the melt-kneading part and discharged through a vent.

The molten resin extruded as a strand from a die provided at the end of the discharge part of the twin-screw extruder was cooled in a water tank, and then, the strand was cut with a pelletizer, thereby obtaining a pellet-like acrylic copolymer (A-a-1).

To the transport part of a twin-screw extruder (trade name: KZW20TW-45MG-NH-600, manufactured by Technovel Corporation) that includes a transport part, a melt-kneading part, a devolatilization part, and a discharge part and in which the screw rotation speed and temperature were set to 100 rpm and 230°C, respectively, the acrylic copolymer (A-a-1) was supplied at 1 kg/hr, and in the melt-kneading part installed in the kneading block, a solution containing 0.8 parts by mass of dimethyl carbonate and 0.2 parts by mass of triethylamine was injected at 0.024 kg/hr, and dimethyl carbonate was reacted with the acidic component (derived from carboxyl and acid anhydride) remaining in the acrylic copolymer (A-a-1). A reverse flight was installed in the screw at the end of a reaction zone.

In the devolatilization part set to 20 Torr (about 2.7 kPa), by-products and excess dimethyl carbonate were volatilized from the molten resin passed through the melt-kneading part and discharged through a vent.

The molten resin extruded as a strand from a die provided at the end of the discharge part of the twin-screw extruder was cooled in a water tank, and then, the strand was cut with a pelletizer, thereby obtaining a pellet-like acrylic copolymer (A-a-2).

To the transport part of a twin-screw extruder (trade name: KZW20TW-45MG-NH-600, manufactured by Technovel Corporation) that includes a transport part, a melt-kneading part, a devolatilization part, and a discharge part and in which the screw rotation speed and temperature were set to 100 rpm and 230°C, respectively, the acrylic copolymer (A-a-2) was supplied at 1 kg/hr.

In the devolatilization part set to 20 Torr (about 2.7 kPa), volatile matter such as unreacted matter was volatilized from the molten resin passed through the melt-kneading part and discharged through a vent.

The molten resin extruded as a strand from a die provided at the end of the discharge part of the twin-screw extruder was cooled in a water tank, and then, the strand was cut with a pelletizer, thereby obtaining a pellet-like acrylic copolymer (A-1). In the acrylic copolymer (A-1), the content of the glutarimide unit (the proportion of the structural unit (R)) was 9 wt%. The amount of the methyl methacrylate unit in the acrylic copolymer (A-1) was the following: {(100-8)-2×9} = 74 wt%.

100 parts by mass of the acrylic copolymer, 0.15 parts by mass of KALCOL 8098 (manufactured by Kao Corporation), and 0.9 parts by mass of ADK STAB LA-31 (manufactured by ADEKA Corporation) were mixed, and the mixture was melt-kneaded and extruded at 250°C with a twin-screw extruder having a screw diameter of 20 mm, thereby obtaining a pellet-like resin composition (I-1). The evaluation results are shown in Table 1.

Production Example 2

An acrylic copolymer (A-2) and a resin composition (I-2) were obtained in the same manner as in Production Example 1, except that the precursor polymer [A-b] was used in place of the precursor polymer [A-a], the amount of monomethylamine added was 0.07 kg/hr, and the solution containing 0.8 parts by mass of dimethyl carbonate and 0.2 parts by mass of triethylamine was injected at 0.018 kg/hr. The evaluation results are shown in Table 1.

Production Example 3

An acrylic copolymer (A-3) and a resin composition (I-3) were obtained in the same manner as in Production Example 1, except that the precursor polymer [A-b] was used in place of the precursor polymer [A-a], the amount of monomethylamine added was 0.14 kg/hr, and the solution containing 0.8 parts by mass of dimethyl carbonate and 0.2 parts by mass of triethylamine was injected at 0.036 kg/hr. The evaluation results are shown in Table 1.

Production Example 4

An acrylic copolymer (A-4) and a resin composition (I-4) were obtained in the same manner as in Production Example 1, except that the precursor polymer [A-c] was used in place of the precursor polymer [A-a], the amount of monomethylamine added was 0.07 kg/hr, and the solution containing 0.8 parts by mass of dimethyl carbonate and 0.2 parts by mass of triethylamine was injected at 0.018 kg/hr. The evaluation results are shown in Table 1.

Production Example 5

An acrylic copolymer (A-5) and a resin composition (I-5) were obtained in the same manner as in Production Example 1, except that the precursor polymer [A-d] was used in place of the precursor polymer [A-a], the amount of monomethylamine added was 0.07 kg/hr, and the solution containing 0.8 parts by mass of dimethyl carbonate and 0.2 parts by mass of triethylamine was injected at 0.008 kg/hr. The evaluation results are shown in Table 1.

Production Example 6

An acrylic copolymer (A-6) and a resin composition (I-6) were obtained in the same manner as in Production Example 1, except that the precursor polymer [A-e] was used in place of the precursor polymer [A-a], the amount of monomethylamine added was 0.08 kg/hr, and the solution containing 0.8 parts by mass of dimethyl carbonate and 0.2 parts by mass of triethylamine was injected at 0.008 kg/hr. The evaluation results are shown in Table 1.

Production Example 7

An acrylic copolymer (A-7) and a resin composition (I-7) were obtained in the same manner as in Production Example 1, except that the precursor polymer [A-f] was used in place of the precursor polymer [A-a], the amount of monomethylamine added was 0.03 kg/hr, and the solution containing 0.8 parts by mass of dimethyl carbonate and 0.2 parts by mass of triethylamine was injected at 0.008 kg/hr. The evaluation results are shown in Table 1.

Production Example 8

An acrylic copolymer (A-8) and a resin composition (I-8) were obtained in the same manner as in Production Example 1, except that the amount of monomethylamine added was 0.30 kg/hr and the solution containing 0.8 parts by mass of dimethyl carbonate and 0.2 parts by mass of triethylamine was injected at 0.075 kg/hr. The evaluation results are shown in Table 1.

Production Example 9

An acrylic copolymer (A-9) and a resin composition (I-9) were obtained in the same manner as in Production Example 1, except that the precursor polymer [A-g] was used in place of the precursor polymer [A-a], the amount of monomethylamine added was 0.07 kg/hr, and the solution containing 0.8 parts by mass of dimethyl carbonate and 0.2 parts by mass of triethylamine was injected at 0.018 kg/hr. The evaluation results are shown in Table 1.

Production Example 10

An acrylic copolymer (A-10) and a resin composition (I-10) were obtained in the same manner as in Production Example 1, except that the precursor polymer [A-g] was used in place of the precursor polymer [A-a], the amount of monomethylamine added was 0.45 kg/hr, and the solution containing 0.8 parts by mass of dimethyl carbonate and 0.2 parts by mass of triethylamine was

injected at 0.125 kg/hr. The evaluation results are shown in Table 1.

Production Example 11

An acrylic copolymer (A-11) and a resin composition (I-11) were obtained in the same manner as in Production Example 1, except that the precursor polymer [A-b] was used in place of the precursor polymer [A-a] and the precursor polymer was passed through the extruder without adding additives. The evaluation results are shown in Table 1.

Table 1

| Resin composition (I) | Production Example 1 | Production Example 2 | Production Example 3 | Production Example 4 | Production Example 5 | Production Example 6 | Production Example 7 | Production Example 8 | Production Example 9 | Production Example 10 | Production Example 11 |
|---|---|---|---|---|---|---|---|---|---|---|---|
| | I-1 | I-2 | I-3 | I-4 | I-5 | I-6 | I-7 | I-8 | I-9 | I-10 | I-11 |
| Glass transition temperature [°C] | 130 | 133 | 143 | 137 | 135 | 138 | 133 | 156 | 119 | 139 | 130 |
| Saturated water absorption rate [wt%] | 2.1 | 1.6 | 1.7 | 1.5 | 1.8 | 1.2 | 3.2 | 3.5 | 2 | 4.4 | 1.6 |
| 1% heat weight reduction ($N_2$) [°C] | 276 | 270 | 303 | 302 | 305 | 318 | 305 | 307 | 270 | 300 | 260 |
| Pencil hardness [-] | 4H | 4H | 4H | 5H | 4H | 5H | 4H | 5H | 2H | 2H | 4H |
| Acrylic copolymer (A) | A-1 | A-2 | A-3 | A-4 | A-5 | A-6 | A-7 | A-8 | A 9 | A-10 | A-11 |
| Content of glutarimide unit [wt%] | 9 | 7 | 15 | 8 | 9 | 19 | 12 | 45 | 10 | 44 | - |
| Precursor polymer | A-a | A-b | A-b | A-c | A-d | A-e | A-f | A-a | A-g | A-g | A-b |
| Polymerization conversion rate [%] | 40 | 37 | 37 | 35 | 41 | 42 | 44 | 40 | - | - | 37 |
| Content of α-methylstyrene unit [wt%] | 8.0 | 12.0 | 12.0 | 18.0 | 13.0 | 19.0 | 4.0 | 8.0 | - | - | 12 |
| Content of styrene unit [wt%] | - | - | - | - | 6.0 | 18.0 | - | - | 10 | 10 | - |
| Weight average molecularweight [-] | 92000 | 110000 | 110000 | 90000 | 82000 | 75600 | 141000 | 92000 | 95000 | 95000 | 110000 |

(continued)

| Resin composition (I) | Production Example 1 | Production Example 2 | Production Example 3 | Production Example 4 | Production Example 5 | Production Example 6 | Production Example 7 | Production Example 8 | Production Example 9 | Production Example 10 | Production Example 11 |
|---|---|---|---|---|---|---|---|---|---|---|---|
| | I-1 | I-2 | I-3 | I-4 | I-5 | I-6 | I-7 | I-8 | I-9 | I-10 | I-11 |
| Amount of chain transfer agent n-OM (phr) | 0.025 | 0 | 0 | 0 | 0.1 | 0.1 | 0 | 0.025 | 0 | 0 | 0 |
| Amount of chain transfer agent t-DM (phr) | 0 | 0 | 0 | 0 | 0 | 0 | 0 | 0 | 0.33 | 0.33 | 0 |

Production Example 12

Multilayer copolymer elastomer (B-1)

1,050 parts by mass of ion-exchanged water, 0.44 parts by mass of sodium polyoxyethylene tridecyl ether acetate, and 0.7 parts by mass of sodium carbonate were placed in a reactor equipped with a stirrer, a thermometer, a nitrogen gas introduction tube, a monomer introduction tube, and a reflux condenser, and the inside of the reactor was sufficiently replaced with nitrogen gas. Subsequently, the internal temperature was set to 80°C. 0.25 parts by mass of potassium persulfate was added thereto, and stirring was performed for 5 minutes. 245 parts by mass of a monomer mixture containing 95.4% by mass of methyl methacrylate, 4.4% by mass of methyl acrylate, and 0.2% by mass of allyl methacrylate was continuously added dropwise thereto over 60 minutes. After completion of the dropwise addition, a polymerization reaction was further performed for 30 minutes so that the polymerization conversion rate was 98% or more.

Subsequently, 0.32 parts by mass of potassium persulfate was added into the same reactor, and stirring was performed for 5 minutes. Thereafter, 315 parts by mass of a monomer mixture containing 80.5% by mass of butyl acrylate, 17.5% by mass of styrene, and 2% by mass of allyl methacrylate was continuously added dropwise thereto over 60 minutes. After completion of the dropwise addition, a polymerization reaction was further performed for 30 minutes so that the polymerization conversion rate was 98% or more.

Next, 0.14 parts by mass of potassium persulfate was added into the same reactor, and stirring was performed for 5 minutes. Thereafter, 140 parts by mass of a monomer mixture containing 95.2% by mass of methyl methacrylate, 4.4% by mass of methyl acrylate, and 0.4% by mass of n-octyl mercaptan was continuously added dropwise over 30 minutes. After completion of the dropwise addition, a polymerization reaction was further performed for 60 minutes so that the polymerization conversion rate was 98% or more. By the above operation, a latex containing a multilayer copolymer elastomer was obtained. The latex was frozen and solidified. Subsequently, the latex was washed with water and dried to obtain a multilayer copolymer elastomer (B-1). The average particle diameter of the multilayer copolymer elastomer (B-1) was 0.2 μm.

80 parts by mass of the acrylic copolymer (A-1), 20 parts by mass of the multilayer copolymer elastomer (B-1), 0.15 parts by mass of KALCOL 8098 (manufactured by Kao Corporation), and 0.9 parts by mass of ADK STAB LA-31 (manufactured by ADEKA Corporation) were mixed, and the mixture was melt-kneaded and extruded at 250°C with a twin-screw extruder having a screw diameter of 20 mm, thereby obtaining a pellet-like resin composition (1-12). The evaluation results are shown in Table 2.

Production Example 13

Block copolymer elastomer (B-2)

To a 3-$m^3$ glass-lining-treated reaction vessel with the inside degassed and replaced with nitrogen, the reaction vessel being capable of performing brine cooling and equipped with a jacket and a stirrer, 735 kg of dry toluene, 0.4 kg of hexamethyltriethylenetetramine, and 39.4 kg of a toluene solution containing 20 mol of isobutylbis(2,6-di-t-butyl-4-methylphenoxy)aluminum were added at room temperature, and 1.17 mol of sec-butyllithium was further added. 35.0 kg of methyl methacrylate was added thereto, and the mixture was reacted at room temperature for 1 hour, thereby obtaining a methyl methacrylate polymer (polymer block (b1-1)) having a weight average molecular weight (referred to below as Mw (b1-1)) of 40,000.

Subsequently, a mixed solution of 24.5 kg of n-butyl acrylate and 10.5 kg of benzyl acrylate was added dropwise over 0.5 hours while maintaining the reaction vessel at -25°C, and a polymer block (b2) containing a copolymer of n-butyl acrylate and benzyl acrylate was grown from one end of the polymer block (b1-1), thereby obtaining a block copolymer elastomer (B-2) having a weight average molecular weight of 80,000. Since the weight average molecular weight of the polymer block (b1-1) was 40,000, the weight average molecular weight (Mw (b2)) of the polymer block (b2) was determined to be 40,000. The content of the polymer block (b2) containing an acrylic acid ester unit in the block copolymer elastomer (B-2) was 50% by mass.

80 parts by mass of the acrylic copolymer (A-1), 20 parts by mass of the block copolymer elastomer (B-2), 0.15 parts by mass of KALCOL 8098 (manufactured by Kao Corporation), and 0.9 parts by mass of ADK STAB LA-31 (manufactured by ADEKA Corporation) were mixed, and the mixture was melt-kneaded and extruded at 250°C with a twin-screw extruder having a screw diameter of 20 mm, thereby obtaining a pellet-like resin composition (1-13). The evaluation results are shown in Table 2.

Production Example 14

80 parts by mass of the acrylic copolymer (A-1), 10 parts by mass of the multilayer copolymer elastomer (B-1), 10 parts by mass of the block copolymer elastomer (B-2), 0.15 parts by mass of KALCOL 8098 (manufactured by Kao Corporation), and 0.9 parts by mass of ADK STAB LA-31 (manufactured by ADEKA Corporation) were mixed, and the mixture was melt-kneaded and extruded at 250°C with a twin-screw extruder having a screw diameter of 20 mm, thereby obtaining a pellet-like resin composition (1-14). The evaluation results are shown in Table 2.

Production Example 15

80 parts by mass of the acrylic copolymer (A-1), 20 parts by mass of the methacrylic resin (C) (PARAPET HR-S manufactured by Kuraray Co., Ltd.), 0.15 parts by mass of KALCOL 8098 (manufactured by Kao Corporation), and 0.9 parts by mass of ADK STAB LA-31 (manufactured by ADEKA Corporation) were mixed, and the mixture was melt-kneaded and extruded at 250°C with a twin-screw extruder having a screw diameter of 20 mm, thereby obtaining a pellet-like resin composition (1-15). The evaluation results are shown in Table 2.

Production Example 16

30 parts by mass of the methacrylic resin (C), 70 parts by mass of the styrene-based copolymer (S-1), 0.15 parts by mass of KALCOL 8098 (manufactured by Kao Corporation), and 0.9 parts by mass of ADK STAB LA-31 (manufactured by ADEKA Corporation) were mixed, and the mixture was melt-kneaded and extruded at 250°C with a twin-screw extruder having a screw diameter of 20 mm, thereby obtaining a pellet-like resin composition (1-16). The evaluation results are shown in Table 2.

Production Example 17

50 parts by mass of the methacrylic resin (C), 50 parts by mass of the styrene-based copolymer (S-2), 0.15 parts by mass of KALCOL 8098 (manufactured by Kao Corporation), and 0.9 parts by mass of ADK STAB LA-31 (manufactured by ADEKA Corporation) were mixed, and the mixture was melt-kneaded and extruded at 250°C with a twin-screw extruder having a screw diameter of 20 mm, thereby obtaining a pellet-like resin composition (I-17). The evaluation results are shown in Table 2.

Table 2

| | | Production Example 12 | Production Example 13 | Production Example 14 | Production Example 15 | Production Example 16 | Production Example 17 |
|---|---|---|---|---|---|---|---|
| | | I-12 | I-13 | I-14 | I-15 | I-16 | I-17 |
| Resin composition (parts by mass) | Acrylic copolymer (A-1) | 80 | 80 | 80 | 80 | | |
| | Multilayer copolymer elastomer(B-1) | 20 | | 10 | | | |
| | Block copolymer elastomer (B-2) | | 20 | 10 | | | |
| | Methacrylic resin (C) | | | | 20 | 30 | 50 |
| | Styrene-based copolymer (S-1) | | | | | 70 | |
| | Styrene-based copolymer (S-2) | | | | | | 50 |
| Evaluation | Glass transition temperature [°C] | 120 | 128 | 125 | 127 | 130 | 140 |
| | Saturated water absorption rate [wt%] | 2.1 | 2 | 2 | 2.1 | 1 | 1.1 |
| | 1% heat weight reduction ($N_2$) [°C] | 276 | 280 | 278 | 285 | 320 | 300 |
| | Pencil hardness [-] | 2H | 3H | 3H | 4H | H | B |

Example 1

Pellets of the polycarbonate were continuously fed into a single-screw extruder having a screw diameter of 50 mm and extruded in a molten state at a cylinder temperature of 280°C. Pellets of the resin composition (I-1) were continuously fed into a single-screw extruder having a screw diameter of 30 mm and extruded in a molten state at a cylinder temperature of 220°C. The polycarbonate and the resin composition (I-1) in a molten state were introduced into a junction block, laminated using a multi-manifold die set at 250°C, and extruded into a sheet, thereby producing a 1000-μm-thick laminate formed from two layers: a 80-um-thick layer comprising the resin composition (I-1) (first layer) and a 920-μm-thick layer comprising the polycarbonate (second layer). The evaluation results of the laminate are shown in Table 3.

Example 2

A laminate with a total thickness of 1000 um that comprises a 80-um-thick layer comprising the resin composition (I-1) and a 920-μm-thick layer comprising the polycarbonate was produced in the same manner as in Example 1, except that the resin composition (I-2) was used in place of the resin composition (I-1) of Example 1. The evaluation results of the laminate are shown in Table 3.

Example 3

A laminate with a total thickness of 1000 um that comprises a 80-um-thick layer comprising the resin composition (I-3) and a 920-μm-thick layer comprising the polycarbonate was produced in the same manner as in Example 1, except that the resin composition (I-3) was used in place of the resin composition (I-1) of Example 1. The evaluation results of the laminate are shown in Table 3.

Example 4

A laminate with a total thickness of 1000 um that comprises a 80-um-thick layer comprising the resin composition (I-4) and a 920-μm-thick layer comprising the polycarbonate was produced in the same manner as in Example 1, except that the resin composition (I-4) was used in place of the resin composition (I-1) of Example 1. The evaluation results of the laminate are shown in Table 3.

Example 5

A laminate with a total thickness of 1000 um that comprises a 80-um-thick layer comprising the resin composition (I-5) and a 920-μm-thick layer comprising the polycarbonate was produced in the same manner as in Example 1, except that the resin composition (I-5) was used in place of the resin composition (I-1) of Example 1. The evaluation results of the laminate are shown in Table 3.

Example 6

A laminate with a total thickness of 1000 um that comprises a 80-um-thick layer comprising the resin composition (I-6) and a 920-μm-thick layer comprising the polycarbonate was produced in the same manner as in Example 1, except that the resin composition (I-6) was used in place of the resin composition (I-1) of Example 1. The evaluation results of the laminate are shown in Table 3.

Example 7

A laminate with a total thickness of 1000 um that comprises a 80-um-thick layer comprising the resin composition (I-12) and a 920-μm-thick layer comprising the polycarbonate was produced in the same manner as in Example 1, except that the resin composition (I-12) was used in place of the resin composition (I-1) of Example 1. The evaluation results of the laminate are shown in Table 3.

Example 8

A laminate with a total thickness of 1000 um that comprises a 80-um-thick layer comprising the resin composition (I-13) and a 920-μm-thick layer comprising the polycarbonate was produced in the same manner as in Example 1, except that the resin composition (I-13) was used in place of the resin composition (I-1) of Example 1. The evaluation results

of the laminate are shown in Table 3.

Example 9

A laminate with a total thickness of 1000 um that comprises a 80-um-thick layer comprising the resin composition (I-14) and a 920-μm-thick layer comprising the polycarbonate was produced in the same manner as in Example 1, except that the resin composition (I-14) was used in place of the resin composition (I-1) of Example 1. The evaluation results of the laminate are shown in Table 3.

Example 10

A laminate with a total thickness of 1000 um that comprises a 80-um-thick layer comprising the resin composition (I-15) and a 920-μm-thick layer comprising the polycarbonate was produced in the same manner as in Example 1, except that the resin composition (I-15) was used in place of the resin composition (I-1) of Example 1. The evaluation results of the laminate are shown in Table 3.

Example 11

Pellets of the polycarbonate were continuously fed into a single-screw extruder having a screw diameter of 50 mm and extruded in a molten state at a cylinder temperature of 280°C. Pellets of the resin composition (I-1) were continuously fed into a single-screw extruder having a screw diameter of 30 mm and extruded in a molten state at a cylinder temperature of 220°C. The polycarbonate and the resin composition (I-1) in a molten state were introduced into a junction block, laminated using a multi-manifold die set at 250°C, and extruded into a sheet, thereby producing a 1000-pm-thick laminate formed from two layers: a 200 μm-thick layer comprising the resin composition (I-1) (first layer) and a 800-um-thick layer comprising the polycarbonate (second layer). The evaluation results of the laminate are shown in Table 3.

Example 12

Pellets of the polycarbonate were continuously fed into a single-screw extruder having a screw diameter of 50 mm and extruded in a molten state at a cylinder temperature of 280°C. Pellets of the resin composition (I-1) were continuously fed into a single-screw extruder having a screw diameter of 30 mm and extruded in a molten state at a cylinder temperature of 220°C. The polycarbonate and the resin composition (I-1) in a molten state were introduced into a junction block, laminated using a multi-manifold die set at 250°C, and extruded into a sheet, thereby producing a 3000-μm-thick laminate formed from two layers: a 50-um-thick layer comprising the resin composition (I-1) (first layer) and a 2950-μm-thick layer comprising the polycarbonate (second layer). The evaluation results of the laminate are shown in Table 3.

Comparative Example 1

A laminate with a total thickness of 1000 um that comprises a 80-um-thick layer comprising the resin composition (I-7) and a 920-μm-thick layer comprising the polycarbonate was produced in the same manner as in Example 1, except that the resin composition (I-7) was used in place of the resin composition (I-1) of Example 1. The evaluation results of the laminate are shown in Table 3.

Comparative Example 2

A laminate with a total thickness of 1000 μm that comprises a 80-um-thick layer comprising the resin composition (I-8) and a 920-μm-thick layer comprising the polycarbonate was produced in the same manner as in Example 1, except that the resin composition (I-8) was used in place of the resin composition (I-1) of Example 1. The evaluation results of the laminate are shown in Table 3.

Comparative Example 3

A laminate with a total thickness of 1000 um that comprises a 80-um-thick layer comprising the resin composition (I-9) and a 920-μm-thick layer comprising the polycarbonate was produced in the same manner as in Example 1, except that the resin composition (I-9) was used in place of the resin composition (I-1) of Example 1. The evaluation results of the laminate are shown in Table 3.

Comparative Example 4

A laminate with a total thickness of 1000 um that comprises a 80-um-thick layer comprising the resin composition (I-10) and a 920-μm-thick layer comprising the polycarbonate was produced in the same manner as in Example 1, except that the resin composition (I-10) was used in place of the resin composition (I-1) of Example 1. The evaluation results of the laminate are shown in Table 3.

Comparative Example 5

A laminate with a total thickness of 1000 um that comprises a 80-um-thick layer comprising the resin composition (I-11) and a 920-μm-thick layer comprising the polycarbonate was produced in the same manner as in Example 1, except that the resin composition (I-11) was used in place of the resin composition (I-1) of Example 1. The evaluation results of the laminate are shown in Table 3.

Comparative Example 6

A laminate with a total thickness of 1000 um that comprises a 80-um-thick layer comprising the resin composition (I-16) and a 920-μm-thick layer comprising the polycarbonate was produced in the same manner as in Example 1, except that the resin composition (I-16) was used in place of the resin composition (I-1) of Example 1. The evaluation results of the laminate are shown in Table 3.

Comparative Example 7

A laminate with a total thickness of 1000 um that comprises a 80-um-thick layer comprising the resin composition (I-17) and a 920-μm-thick layer comprising the polycarbonate was produced in the same manner as in Example 1, except that the resin composition (I-17) was used in place of the resin composition (I-1) of Example 1. The evaluation results of the laminate are shown in Table 3.

Table 3

| | Composition of first layer | Thickness of first layer/total thickness [%] | ΔTg [°C] (resin composition (I)-resin composition (T)) | Δ Saturated water absorption rate [%] (resin composition (I)-resin composition (T)) | Moldability | Dimensional stability | Surface hardness | Weather resistance |
|---|---|---|---|---|---|---|---|---|
| Example 1 | Resin composition (I-1) | 8 | 20 | 1.8 | A | H | H | A |
| Example 2 | Resin composition (I-2) | 8 | 17 | 1.3 | A | H | H | A |
| Example 3 | Resin composition (I-3) | 8 | 7 | 1.4 | A | H | H | A |
| Example 4 | Resin composition (I-4) | 8 | 13 | 1.2 | A | H | H | A |
| Example 5 | Resin composition (I-5) | 8 | 15 | 1.5 | A | H | H | A |
| Example 6 | Resin composition (I-6) | 8 | 12 | 0.9 | A | H | H | A |
| Example 7 | Resin composition (I-12) | 8 | 30 | 1.8 | A | H | H | A |
| Example 8 | Resin composition (I-13) | 8 | 22 | 1.7 | A | H | H | A |
| Example 9 | Resin composition (I-14) | 8 | 25 | 1.7 | A | H | H | A |

(continued)

| | Composition of first layer | Thickness of first layer/total thickness [%] | ΔTg [°C] (resin composition (I)-resin composition (T)) | Δ Saturated water absorption rate [%] (resin composition (I)-resin composition (T)) | Moldability | Dimensional stability | Surface hardness | Weather resistance |
|---|---|---|---|---|---|---|---|---|
| Example 10 | Resin composition (I-15) | 8 | 23 | 1.8 | A | H | H | A |
| Example 11 | Resin composition (I-1) | 20 | 20 | 1.8 | A | A | H | A |
| Example 12 | Resin composition (I-1) | 1.7 | 20 | 1.8 | A | H | A | A |
| Comparative Example 1 | Resin composition (I-7) | 8 | 17 | 2.9 | A | C | A | A |
| Comparative Example 2 | Resin composition (I-8) | 8 | 6 | 3.2 | A | C | A | A |
| Comparative Example 3 | Resin composition (I-9) | 8 | 31 | 1.7 | A | C | A | A |
| Comparative Example 4 | Resin composition (I-10) | 8 | 11 | 4.1 | A | C | A | A |
| Comparative Example 5 | Resin composition (I-11) | 8 | 20 | 1.3 | C | H | H | A |
| Comparative Example 6 | Resin composition (I-16) | 8 | 20 | 0.7 | A | H | C | C |

(continued)

| | Composition of first layer | Thickness of first layer/total thickness [%] | $\Delta$Tg [°C] (resin composition (I)-resin composition (T)) | $\Delta$ Saturated water absorption rate [%] (resin composition (I)-resin composition (T)) | Moldability | Dimensional stability | Surface hardness | Weather resistance |
|---|---|---|---|---|---|---|---|---|
| Comparative Example 7 | Resin composition (I-17) | 8 | 10 | 0.8 | A | H | C | C |

As shown in Table 3, since the laminates (Examples 1 to 6, 11, and 12) of the present invention were obtained using the resin compositions (I-1) to (I-6), each of which contains an acrylic copolymer excellent in heat resistance and low water absorption, the differences in glass transition temperature and in saturated water absorption rate between each of these resin compositions and the resin composition (T) containing polycarbonate were small, and excellent dimensional stability was exhibited. Furthermore, since the resin compositions had excellent heat decomposition resistance and high pencil hardness, the laminates of the present invention had excellent moldability and excellent surface hardness. Moreover, the laminates of the present invention also had excellent weather resistance. The laminates (Example 7 to 10) of the present invention contain an acrylic copolymer that is excellent in heat resistance, pencil hardness, and weather resistance; thus, there was no performance degradation even in the cases of using the resin compositions (I-12) to (I-15) each containing an elastomer or a methacrylic resin.

In contrast, the laminates (Comparative Examples 1 to 4) obtained using the resin compositions (I-7) to (I-10), which have low heat resistance and/or low water absorption, showed poor dimensional stability. The laminate (Comparative Example 5) obtained using the resin composition (I-11), which has low heat decomposition resistance, showed poor moldability. Furthermore, the laminates (Comparative Examples 6 and 7) obtained using the resin compositions (I-16) and (I-17), each of which contains a styrene-based copolymer, had low surface hardness and poor weather resistance.

Industrial Applicability

The laminate of the present invention has excellent appearance quality, good dimensional stability, and good surface hardness and is suitable for use in covers and housings of display devices, window materials and covers for the interiors and exteriors of vehicles etc.

## Claims

1. A laminate comprising:

 a layer comprising a resin composition (I) containing 51% by mass or more of an acrylic copolymer (A), the acrylic copolymer (A) containing
 30 to 87% by mass of a methyl methacrylate unit,
 6 to 40% by mass of a structural unit (R) having at least one ring structure in a main chain, the structural unit (R) being selected from the group consisting of a glutaric anhydride unit and an N-substituted or unsubstituted glutarimide unit, and
 7 to 30% by mass of an $\alpha$-methylstyrene unit; and
 a layer comprising a resin composition (T) containing polycarbonate.

2. The laminate according to claim 1, wherein the structural unit (R) is an N-substituted or unsubstituted glutarimide unit represented by Formula (QI):

[Chem. 1]

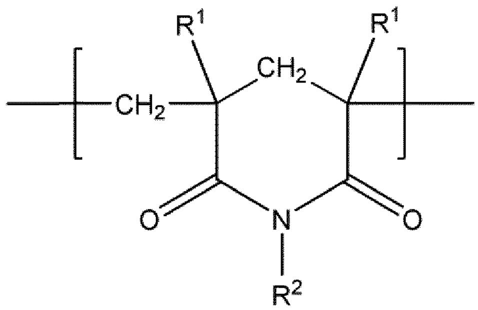

(QI)

wherein $R^{1'}$s are each independently a hydrogen atom or a methyl group, and $R^2$ is a hydrogen atom, an alkyl group having 1 to 18 carbon atoms, a cycloalkyl group having 3 to 12 carbon atoms, or an organic group having an aromatic ring and 6 to 15 carbon atoms.

3. The laminate according to claim 1 or 2, wherein the resin composition (I) contains 1 to 49% by mass of a multilayer copolymer elastomer (B-1) containing a methacrylic acid ester unit and an acrylic acid ester unit.

4. The laminate according to claim 1 or 2, wherein the resin composition (I) contains 1 to 49% by mass of a block copolymer elastomer (B-2) comprising a polymer block (b1) containing a methacrylic acid ester unit and a polymer block (b2) containing an acrylic acid ester unit.

5. The laminate according to claim 1 or 2, wherein the resin composition (I) contains 1 to 49% by mass of a methacrylic resin (C).

6. The laminate according to any one of claims 1 to 5, wherein the absolute value of the difference in glass transition temperature between the resin composition (I) and the resin composition (T) is 30°C or less and the absolute value of the difference in saturated water absorption rate between the resin composition (I) and the resin composition (T) is 2% or less.

7. The laminate according to any one of claims 1 to 6, wherein the thickness of the layer comprising the resin composition (I) is 2 to 15% of the total thickness of the laminate.

8. The laminate according to any one of claims 1 to 6, wherein at least one surface of the laminate has the layer comprising the resin composition (I).

9. The laminate according to any one of claims 1 to 8, further comprising a scratch-resistant layer on at least one surface of the laminate.

**INTERNATIONAL SEARCH REPORT**

International application No. **PCT/JP2021/016022**

**A. CLASSIFICATION OF SUBJECT MATTER**

***B32B 27/30***(2006.01)i; ***B32B 27/36***(2006.01)i; ***C08F 8/32***(2006.01)i; ***C08F 220/14***(2006.01)i
FI: B32B27/30 A; B32B27/36 102; C08F8/32; C08F220/14

According to International Patent Classification (IPC) or to both national classification and IPC

**B. FIELDS SEARCHED**

Minimum documentation searched (classification system followed by classification symbols)

B32B27/30; B32B27/36; C08F8/32; C08F220/14

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2018/168960 A1 (KANEKA CORP.) 20 September 2018 (2018-09-20) claims, examples, entire text | 1-9 |
| A | JP 2011-052198 A (KANEKA CORP.) 17 March 2011 (2011-03-17) claims, examples, entire text | 1-9 |
| A | JP 2004-126546 A (TORAY INDUSTRIES, INC.) 22 April 2004 (2004-04-22) claims, examples, entire text | 1-9 |
| A | JP 2009-248416 A (SUMITOMO CHEMICAL CO., LTD.) 29 October 2009 (2009-10-29) claims, examples, entire text | 1-9 |
| P, A | WO 2020/138315 A1 (KURARAY CO., LTD.) 02 July 2020 (2020-07-02) claims, examples, entire text | 1-9 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 June 2021** | **06 July 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/016022**

| Patent document cited in search report | Publication date (day/month/year) | Patent family member(s) | Publication date (day/month/year) |
|---|---|---|---|
| WO 2018/168960 A1 | 20 September 2018 | US 2020/0002491 A1<br>claims, examples<br>CN 110267794 A<br>KR 10-2019-0113938 A | |
| JP 2011-052198 A | 17 March 2011 | (Family: none) | |
| JP 2004-126546 A | 22 April 2004 | (Family: none) | |
| JP 2009-248416 A | 29 October 2009 | (Family: none) | |
| WO 2020/138315 A1 | 02 July 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009248416 A
- WO 2014050136 A
- WO 2011145630 A
- WO 2015050051 A
- JP 2007197703 A
- JP 2010096919 A
- WO 200510838 A1
- JP 2010254742 A
- JP 2008273140 A
- JP 2008274187 A
- JP 2005023272 A
- JP 2003231785 A